(19) Europäisches Patentamt
European Patent Office
Office européen des brevets

(11) EP 3 560 730 B1

(12) **EUROPEAN PATENT SPECIFICATION**

(45) Date of publication and mention of the grant of the patent:
**24.02.2021 Bulletin 2021/08**

(21) Application number: **17883646.6**

(22) Date of filing: **08.09.2017**

(51) Int Cl.:
***B60C 7/00*** *(2006.01)* ***B60C 1/00*** *(2006.01)*
***B60C 5/14*** *(2006.01)* ***B60C 19/08*** *(2006.01)*
***C08L 75/04*** *(2006.01)* *B29D 30/06* *(2006.01)*

(86) International application number:
**PCT/JP2017/032537**

(87) International publication number:
**WO 2018/116545 (28.06.2018 Gazette 2018/26)**

(54) **TIRE**

REIFEN

PNEU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.12.2016 JP 2016249562**

(43) Date of publication of application:
**30.10.2019 Bulletin 2019/44**

(73) Proprietor: **Bridgestone Corporation**
**Tokyo 104-8340 (JP)**

(72) Inventors:
- **HOMMA, Masahiro**
  **Tokyo 104-8340 (JP)**
- **SONE, Naoyuki**
  **Tokyo 104-8340 (JP)**
- **YAMADA, Takumi**
  **Tokyo 104-8340 (JP)**

(74) Representative: **Oxley, Robin John George**
**Marks & Clerk LLP**
**15 Fetter Lane**
**London EC4A 1BW (GB)**

(56) References cited:
**EP-A1- 2 042 296** **EP-A1- 2 335 911**
**EP-A1- 2 420 393** **WO-A1-2010/119668**
**JP-A- H09 216 502** **JP-A- 2012 040 862**
**JP-A- 2013 010 494** **JP-A- 2013 057 016**
**JP-A- 2013 166 427** **JP-A- 2013 166 428**
**US-A- 4 874 670**

- **Anonymous: "Total Materia :: Mechanical Properties", , 9 October 2019 (2019-10-09), XP055630511, Retrieved from the Internet: URL:https://search.totalmateria.com/PlusMaterialDetails/MaterialDetailsContainer?vkKey=79201&group=Polymers&keyNum=1&type=1&hs =0 [retrieved on 2019-10-09]**
- **Anonymous: "Total Materia :: Physical Properties", , 9 October 2019 (2019-10-09), XP055630514, Retrieved from the Internet: URL:https://search.totalmateria.com/PlusMaterialDetails/MaterialDetailsContainer?vkKey=79201&group=Polymers&keyNum=1&type=1&hs =0# [retrieved on 2019-10-09]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 560 730 B1

Printed by Jouve, 75001 PARIS (FR)

## Description

Technical Field

The present invention relates to a tire.

Background Art

In recent years, a tire provided with a tire main body (hereinafter, also referred to as a tire frame) formed by using a resin material instead of a conventional material such as rubber, for reasons of weight reduction, easiness of molding, easiness of recycling, or the like is under development. For example, Japanese Patent Application Laid-Open (JP-A) No. 2012-46030 discloses a tire having a tire frame formed by using a polyamide-based thermoplastic elastomer as a resin material. Reference is also made to EP 2420393.

SUMMARY OF INVENTION

Technical Problem

In a tire in which the tire frame includes a resin, cracks may occur on an inner circumferential surface of the tire frame due to an impact applied from the outside as the tire is used (for example, traveling of a vehicle equipped with a tire). In particular, when the tire is used after the inner circumferential surface of the tire frame is exposed to light, cracks may be more likely to occur on the inner circumferential surface of the tire frame.

The present disclosure is made in view of the above-described situation, and an object of this disclosure is to provide a tire in which a tire frame contains a resin and occurrence of cracks on an inner circumferential surface of the tire frame is suppressed.

Solution to Problem

Specific means for solving the above problems include the following embodiments.

<1> A tire including:

a tire frame having an annular shape and containing a resin; and
a resin layer that is provided on at least a part of an inner circumferential surface of the tire frame and that contains a urethane resin, the resin layer having a tensile modulus of elasticity of from 2 MPa to 50 MPa, the tensile modulus of elasticity of the resin layer being from 0.01 times to 0.50 times a tensile modulus of elasticity of the tire frame, and the resin layer having a softening point of 80°C or higher.

Effects of Invention

According to an embodiment of the invention, a tire in which a tire frame contains a resin and occurrence of cracks on an inner circumferential surface of the tire frame is suppressed may be provided.

BRIEF DESCRIPTION OF DRAWINGS

Fig. 1A is a perspective view showing a cross section of a part of a tire according to an embodiment of the present invention.
Fig. 1B is a cross-sectional view of a bead portion mounted on a rim.
Fig. 2 is a cross-sectional view along a tire rotating shaft showing a state in which a reinforcing cord is mounted on a crown portion of a tire case in a tire according to a first embodiment.

DESCRIPTION OF EMBODIMENTS

Specific embodiments of the invention will be described in detail hereinafter. However, it should be noted that the invention is not restricted to the embodiments below but can be carried out with appropriate modification within the scope of the object of the invention.

In addition, in this specification, a "resin" is a concept containing a thermoplastic resin, a thermoplastic elastomer, and a thermosetting resin, and does not contain a vulcanized rubber.

Moreover, "rubber" is a polymer compound that has elasticity, but is distinguished from a thermoplastic elastomer in this specification.

In addition, a "thermoplastic elastomer" is a polymer compound having elasticity, and means a copolymer that includes a polymer as a component of a hard segment having crystallinity and a high melting point or a polymer as a component of a hard segment having a high cohesive force, and a polymer as a component of a soft segment having non-crystallinity and a low glass transition temperature.

In the present specification, those numerical ranges that are stated with "to" each denote a range that includes the numerical values stated before and after "to" as the lower and upper limit values, respectively.

The term "step" used herein encompasses not only discrete steps but also those steps that cannot be clearly distinguished from other steps, as long as the intended purpose of the step is achieved.

In the present specification, when reference is made to the amount of a component contained in a composition and there are plural substances corresponding to the component in the composition, the indicated amount of the component means the total amount of the plural substances existing in the composition unless otherwise specified.

<<Tire>>

A tire according to an embodiment of the invention includes a tire frame having an annular shape and including a resin, and a resin layer that is provided on at least a part of an inner circumferential surface of the tire frame that includes a urethane resin, and that has a softening point of 80°C or higher.

For example, when the tire in which the tire frame includes a resin is mounted on a vehicle and traveled, the tire is continuously subjected to an impact from a road surface and therefore cracks may occur on an inner circumferential surface of the tire frame. In particular, when the tire is displayed outdoors with the inner circumferential surface of the tire frame exposed, sunlight is emitted to the inner circumferential surface of the tire frame, and the resin contained in the tire frame may be deteriorated by ultraviolet rays of sunlight or the like. When the tire is continuously subjected to an impact from a road surface while the resin contained in the tire frame is deteriorated, cracks are more likely to occur on the inner circumferential surface of the tire frame.

In addition, when the vehicle travels, the temperature of the tire is likely to rise due to vibration, impact, or the like applied from a road surface. The temperature rise of an outer circumferential surface of the tire is suppressed by air cooling when the vehicle travels, but heat tends to be easily accumulated inside the tire frame and thus the temperature is particularly likely to rise in the tire.

Therefore, for example, when a protective film having a softening point of lower than 80°C is provided on the inner circumferential surface of the tire frame, the protective film may be deformed due to heat generated while traveling, and therefore does not work well.

On the other hand, with respect to the tire, a resin layer containing a urethane resin, having a tensile modulus of elasticity having a range from 2 MPa to 50 MPa, which is from 0.01 to 0.50 times the tensile modulus of elasticity of the tire frame, and having a softening point of 80°C or higher is provided on the inner circumferential surface of the tire frame.

Therefore, as compared to a case in which the resin layer is not provided, a strain of the tire frame due to impact or vibration applied from the road surface is dispersed by the resin layer, the occurrence of cracks on the inner circumferential surface of the tire frame is suppressed, and the durability of the tire is improved. In addition, the softening point of the resin layer is set to be 80°C or higher, and as a result, as compared to a case in which the resin layer having the softening point of lower than 80°C is provided, even if the temperature in the tire frame rises while traveling, the function of the resin layer dispersing the strain of the tire frame due to impact or vibration applied from a road surface is maintained. The resin layer contains the urethane resin, and as a result, compared with a case in which the resin layer is made of another resin (for example, polystyrene resin), there is an advantage in that the resin layer is flexible to suppress cracks.

The tensile modulus of elasticity of the resin layer is within the range, and as a result, compared with a case in which the tensile modulus of elasticity of the resin layer is smaller than the range, a crack suppression effect of suppressing the resin layer from being peeled due to impact while traveling tends to be continued, and as compared to a case in which the tensile modulus of elasticity of the resin layer is larger than the range, the crack suppression effect is more easily improved due to the flexibility of the resin layer. A ratio of the tensile modulus of elasticity of the resin layer with respect to the tire frame is within the range, and as a result, compared with a case in which the tensile modulus of elasticity of the resin layer is smaller than the range, a crack suppression effect of suppressing the resin layer from being peeled due to impact while traveling tends to be continued, and as compared to a case in which the tensile modulus of elasticity of the resin layer is larger than the range, the crack suppression effect is more easily improved due to the flexibility of the resin layer.

From the above description, it is considered that the occurrence of cracks on the inner circumferential surface

of the tire frame containing the resin is suppressed in the tire.

The softening point is a value obtained as follows. Specifically, the softening point is measured using a dynamic viscoelasticity tester (RSA-G2, manufactured by TA Instruments) under the conditions that a temperature has a range from 0°C to 180°C, a temperature rising rate is 4°C/min, a strain is 1%, and a measurement frequency is 35 Hz. A temperature at a minimum peak position of a primary derivative of an elastic loss (E') is taken as the softening point (°C).

The tensile modulus of elasticity is measured at room temperature (25°C) and at 100 mm/min of tensile velocity using a tension tester (RTF-1210, manufactured by A & D Company, Limited), and is a value of the tension modulus of elasticity calculated from an initial inclination.

Hereinafter, an embodiment of the tire frame, the resin layer, and the tire that are used in an embodiment of the tire of the invention, will be described.

[Tire Frame]

A tire frame is an annular member containing a resin. The tire frame is a member formed of a single layer including a bead portion, maintains a shape of the tire, and has a load protection function. That is, the tire frame containing the resin is designed, for example, for the purpose of maintaining the shape of the tire and reducing a thickness and a weight as compared to the conventional rubber tire.

The tire frame can be formed using the resin material containing the resin (that is, a resin component). A resin material used to form the tire frame may contain at least a resin, and may also contain other components such as additives as long as the effects of the invention are not impaired. However, a content of the resin in the resin material is preferably 50% by mass or greater and more preferably 90% by mass or greater with respect to a total amount of the resin material.

Examples of the resin contained in the tire frame include a thermoplastic resin, a thermoplastic elastomer, and a thermosetting resin. From the viewpoint of mechanical durability, the tire frame preferably contains a thermoplastic elastomer as a resin, and more preferably contains a polyamide-based thermoplastic elastomer.

Examples of the thermosetting resin include phenol-based thermosetting resins, urea-based thermosetting resins, melamine-based thermosetting resins, and epoxy-based thermosetting resins.

Examples of the thermoplastic resin include polyamide-based thermoplastic resins, polyester-based thermoplastic resins, olefin-based thermoplastic resins, polyurethane-based thermoplastic resins, vinyl chloride-based thermoplastic resins, and polystyrene-based thermoplastic resins. These thermoplastic resins may be used singly, or two or more kinds thereof may be used in combination. Thereamong, as the thermoplastic resin, at least one selected from the group consisting of polyamide-based thermoplastic resins, polyester-based thermoplastic resins, and olefin-based thermoplastic resins is preferable, and at least one selected from the group consisting of polyamide-based thermoplastic resins and olefin-based thermoplastic resins is more preferable.

Examples of the thermoplastic elastomer include polyamide-based thermoplastic elastomer (TPA), polystyrene-based thermoplastic elastomer (TPS), polyurethane-based thermoplastic elastomer (TPU), olefin-based thermoplastic elastomer (TPO), polyester-based thermoplastic elastomer (TPEE), thermoplastic crosslinked rubber (TPV), and other thermoplastic elastomers (TPZ) which are defined in JIS K 6418. Considering the elasticity required while traveling, moldability at the time of production, or the like, examples of the resin contained in the resin material forming the tire frame preferably include the thermoplastic resin, more preferably the thermoplastic elastomer, and particularly preferably the polyamide-based thermoplastic elastomer.

-Polyamide-based Thermoplastic Elastomer-

The term "polyamide-based thermoplastic elastomer" means a thermoplastic resin material composed of a copolymer that contains a polymer constituting a crystalline and high-melting-point hard segment and a polymer constituting an amorphous and low-glass-transition-temperature soft segment, wherein the polymer constituting the hard segment has an amide bond (-CONH-) in its main chain.

Examples of the polyamide-based thermoplastic elastomer include materials in which at least a polyamide constitutes a crystalline and high-melting-point hard segment and other polymer (e.g., a polyester or a poly ether) constitutes an amorphous and low-glass-transition-temperature soft segment. Further, the polyamide-based thermoplastic elastomer may be composed of, in addition to a hard segment and a soft segment, a chain extender such as a dicarboxylic acid.

Specific examples of the polyamide-based thermoplastic elastomer include amide-based thermoplastic elastomers (TPA) that are defined in JIS K6418:2007, and polyamide-based elastomers described in JP-ANo. 2004-346273.

In the polyamide-based thermoplastic elastomer, the polyamide constituting the hard segment is, for example, a polyamide formed from a monomer represented by the following Formula (1) or (2).

$H_2N-R^1-COOH$ (1)

In Formula (1), $R^1$ represents a hydrocarbon molecular chain having from 2 to 20 carbon atoms (e.g., an alkylene group having from 2 to 20 carbon atoms).

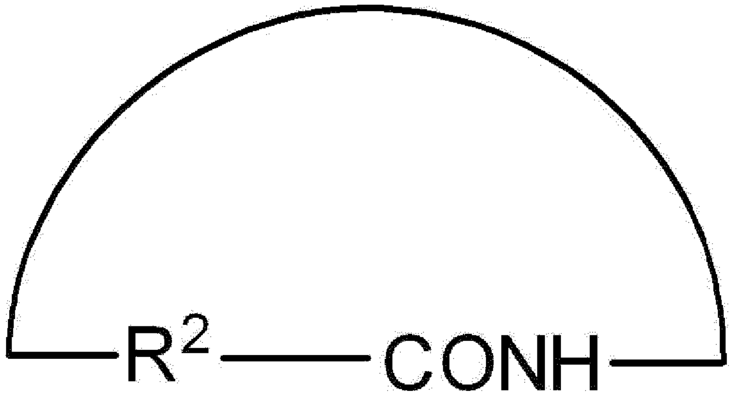

(2)

In Formula (2), $R^2$ represents a hydrocarbon molecular chain having from 3 to 20 carbon atoms (e.g., an alkylene group having from 3 to 20 carbon atoms).

In Formula (1), $R^1$ is preferably a hydrocarbon molecular chain having from 3 to 18 carbon atoms (e.g., an alkylene group having from 3 to 18 carbon atoms), more preferably a hydrocarbon molecular chain having from 4 to 15 carbon atoms (e.g., an alkylene group having from 4 to 15 carbon atoms), particularly preferably a hydrocarbon molecular chain having from 10 to 15 carbon atom (e.g., an alkylene group having from 10 to 15 carbon atoms).

In Formula (2), $R^2$ is preferably a hydrocarbon molecular chain having from 3 to 18 carbon atoms (e.g., an alkylene group having from 3 to 18 carbon atoms), more preferably a hydrocarbon molecular chain having from 4 to 15 carbon atom (e.g., an alkylene group having from 4 to 15 carbon atoms), particularly preferably a hydrocarbon molecular chain having from 10 to 15 carbon atoms (e.g., an alkylene group having from 10 to 15 carbon atoms).

Examples of the monomer represented by Formula (1) or (2) include $\omega$-aminocarboxylic acids and lactams. Examples of the polyamide constituting the hard segment include polycondensates of an $\omega$-aminocarboxylic acid and a lactam, and copolycondensates of a diamine and a dicarboxylic acid.

Examples of the $\omega$-aminocarboxylic acid include aliphatic $\omega$-aminocarboxylic acids having from 5 to 20 carbon atoms, such as 6-aminocaproic acid, 7-aminoheptanoic acid, 8-aminooctanoic acid, 10-aminocapric acid, 11-aminoundecanoic acid, and 12-aminododecanoic acid. Examples of the lactam include aliphatic lactams having from 5 to 20 carbon atoms, such as lauryl lactam, $\varepsilon$-caprolactam, undecanelactam, $\omega$-enantholactam, and 2-pyrrolidone.

Examples of the diamine include aliphatic diamines having from 2 to 20 carbon atoms, and aromatic diamines having from 6 to 20 carbon atoms. Examples of the aliphatic diamines having from 2 to 20 carbon atoms and the aromatic diamines having from 6 to 20 carbon atoms include ethylenediamine, trimethylenediamine, tetramethylenediamine, hexamethylenediamine, heptamethylenediamine, octamethylenediamine, nonamethylenediamine, decamethylenediamine, undecamethylenediamine, dodecamethylenediamine, 2,2,4-trimethylhexamethylenediamine, 2,4,4-trimethylhexamethylenediamine, 3-methylpentamethylenediamine, and *meta*-xylene diamine.

The dicarboxylic acid can be represented by $HOOC-(R^3)_m-COOH$($R^3$: a hydrocarbon molecular chain having from 3 to 20 carbon atoms, m: 0 or 1), and examples thereof include aliphatic dicarboxylic acids having from 2 to 20 carbon atoms, such as oxalic acid, succinic acid, glutaric acid, adipic acid, pimelic acid, suberic acid, azelaic acid, sebacic acid, and dodecanedioic acid.

As the polyamide constituting the hard segment, a polyamide obtained by ring-opening polycondensation of lauryl lactam, $\varepsilon$-caprolactam or undecanelactam can be preferably used.

Examples of the polymer which forms the soft segment include a polyester, and a polyether, and specifically, polyethylene glycol, polypropylene glycol, poly(tetramethylene ether) glycol, and an ABA-type triblock polyether. These may be used singly or in a combination of two or more kinds thereof. Further, a polyetherdiamine obtained by reacting ammonia or the like with the end of a polyether may be also used.

In this regard, the "ABA-type triblock polyether" means a polyether expressed by the following Formula (3).

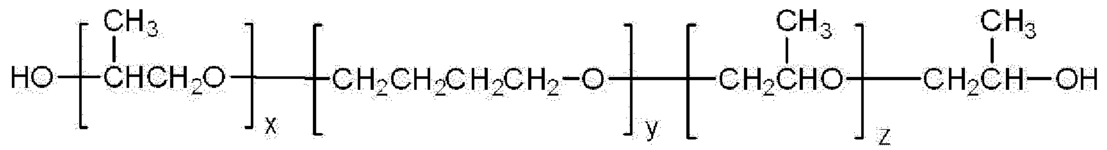

(3)

In Formula (3), x and z each represent an integer from 1 to 20. y represents an integer from 4 to 50.

In Formula (3), x and z are each preferably an integer from 1 to 18, more preferably an integer from 1 to 16, especially preferably an integer from 1 to 14, and most preferably an integer from 1 to 12. Further, in Formula (3), y is preferably an integer from 5 to 45, more preferably an integer from 6 to 40, especially preferably an integer from 7 to 35, and most preferably an integer from 8 to 30.

Examples of a combination of the hard segment and the soft segment include the combinations of the respective hard segment and the respective soft segment described above. Among them, as the combination of the hard segment and the soft segment, a combination of a ring-opening polycondensate of lauryl lactam and poly(ethylene glycol), a combination of a ring-opening polycondensate of lauryl lactam and poly(propylene glycol), a combination of a ring-opening polycondensate of lauryl lactam and poly(tetramethylene ether) glycol, and a combination of a ring-opening polycondensate of lauryl lactam and an ABA-ype triblock polyether are preferable, and a combination of a ring-opening polycondensate of lauryl lactam and an ABA type triblock polyether is especially preferable.

A number average molecular weight of polymer (polyamide) forming a hard segment is preferably from 300 to 15,000 from the viewpoint of melt moldability. A number average molecular weight of polymer forming a soft segment is preferably from 200 to 6,000 from the viewpoint of toughness and low temperature flexibility. A mass ratio (x : y) of the hard segment (x) and the soft segment (y) is preferably 50 : 50 to 90 : 10, and more preferably 50 : 50 to 80 : 20 from the viewpoint of moldability.

The polyamide-based thermoplastic elastomer can be synthesized by copolymerizing the polymer for forming the hard segment and the polymer for forming the soft segment by a publicly known method.

As a commercial product for the polyamide-based thermoplastic elastomer, for example, "UBE STAXPA" series (for example, XPA9063X1, XPA9055X1, XPA9048X2, XPA9048X1, XPA9040X1, and XPA9040X2XPA9044) from UBE Industries, Ltd., "VESTAMID" series (for example, E40-S3, E47-S1, E47-S3, E55-S1, E55-S3, EX9200, and E50-R2), from Daicel-Evonik Ltd., or the like may be used.

The polyamide-based thermoplastic elastomer meets the performance required as the tire frame from the viewpoint of elastic modulus (flexibility), strength, and the like, and thus is favorable as the resin material. The polyamide-based thermoplastic elastomers often have favorable adhesion to thermoplastic resins and thermoplastic elastomers. Therefore, when the polyamide-based thermoplastic elastomer is used as the resin material forming the tire frame, there is a tendency to increase the degree of freedom in selecting materials in layers and members provided in contact with the tire frame from the viewpoint of the adhesion.

- Polystyrene-based thermoplastic elastomer -

Examples of the polystyrene-based thermoplastic elastomer include a material, in which at least polystyrene forms a hard segment, and another polymer (for example, polybutadiene, polyisoprene, polyethylene, hydrogenate polybutadiene, and hydrogenate polyisoprene) forms an amorphous soft segment with a low glass transition temperature. As the polystyrene that forms the hard segment, for example, one yielded by a publicly known method, such as a radical polymerization method or an ionic polymerization method, is favorably used, and one of specific examples is polystyrene having an anionic living polymer form. Examples of a polymer forming the soft segment include polybutadiene, polyisoprene, and poly(2,3-dimethylbutadiene).

Examples of a combination of the hard segment and the soft segment include the combinations of the respective hard segment and the respective soft segment described above. Among them, as the combination of the hard segment and the soft segment, a combination of polystyrene and polybutadiene, and a combination of polystyrene and polyisoprene is preferable. Further, the soft segment is preferably hydrogenated, so as to suppress unintended crosslinking of a thermoplastic elastomer.

The number average molecular weight of the polymer (polystyrene) forming the hard segment is preferably from 5,000 to 500,000, and more preferably from 10,000 to 200,000.

Meanwhile, the number average molecular weight of the polymer forming the soft segment is preferably from 5,000 to 1,000,000, more preferably from 10,000 to 800,000, and especially preferably from 30,000 to 500,000. Further, the volume ratio (x:y) of a hard segment (x) to a soft segment (y) is preferably from 5:95 to 80:20, and more preferably from 10/90 to 70/30, from a viewpoint of formability.

The polystyrene-based thermoplastic elastomer can be synthesized by copolymerizing the polymer for forming the hard segment and the polymer for forming the soft segment by a publicly known method.

Examples of the polystyrene-based thermoplastic elastomer include a styrene/butadiene-based copolymer [SBS (polystyrene-poly(butylene) block-polystyrene), SEBS (polystyrene-poly(ethylene/butylene) block-polystyrene)], a styrene-isoprene copolymer (polystyrene-polyisoprene block-polystyrene), a styrene/propylene-based copolymer [SEP (polystyrene-(ethylene/propylene) block), SEPS (polystyrene-poly(ethylene/propylene) block-polystyrene), SEEPS (polystyrene-poly(ethylene-ethylene/propylene) block-polystyrene), and SEB (polystyrene (ethylene /butylene) block)].

As a commercial product for the polystyrene-based thermoplastic elastomer, for example, "TUFTEC" series (for example, H1031, H1041, H1043, H1051, H1052, H1053, H1062, H1082, H1141, H1221, and H1272) produced by Asahi Kasei Corporation, and "SEBS" series (8007, 8076, *etc.*), "SEPS" series (2002, 2063, *etc.*), *etc.* produced by Kuraray Co., Ltd. may be used.

- Polyurethane-based thermoplastic elastomer -

With respect to the polyurethane-based thermoplastic elastomer, for example, there is a material in which at least polyurethane forms a hard segment with pseudo-crosslinks formed by physical aggregation, and another polymer forms an amorphous soft segment with a low glass transition temperature.

Specific examples of the polyurethane-based thermoplastic elastomer include a polyurethane-based thermoplastic elastomer (TPU) as defined according to JIS K6418: 2007. A polyurethane-based thermoplastic elastomer can be expressed as a copolymer including a soft segment containing a unit structure expressed by the following Formula A, and a hard segment containing a unit structure expressed by the following Formula B.

A :

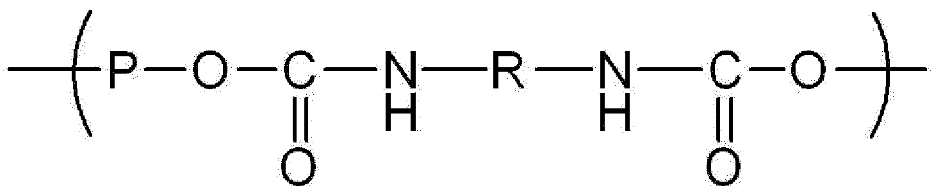

B :

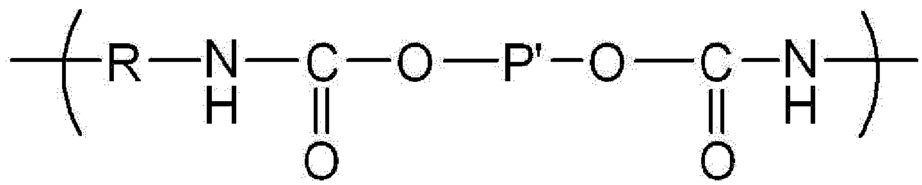

In Formulas, P represents a long-chain aliphatic polyether or a long-chain aliphatic polyester. R represents an aliphatic hydrocarbon, an alicyclic hydrocarbon, or an aromatic hydrocarbon. P' represents a short chain aliphatic hydrocarbon, an alicyclic hydrocarbon, or an aromatic hydrocarbon.

As the long-chain aliphatic polyether or the long-chain aliphatic polyester expressed by P in Formula A, for example, that with a molecular weight of from 500 to 5,000 may be used. P is originated from a diol compound containing a long-chain aliphatic polyether or a long-chain aliphatic polyester expressed as P. Examples of such a diol compound include polyethylene glycol, polypropylene glycol, poly(tetramethylene ether) glycol, poly(butylene adivate) diol, poly-ε-caprolactone diol, poly(hexamethylene carbonate) diol, and an ABA-type triblock polyether, molecular weight of which being within the above range.

These may be used singly or in a combination of two or more kinds thereof.

In Formulae A and B, R is a partial structure that is introduced using a diisocyanate compound containing the aliphatic, alicyclic or aromatic hydrocarbon represented by R. Example of the aliphatic diisocyanate compound containing the aliphatic hydrocarbon represented by R include 1,2-ethylene diisocyanate, 1,3-propylene diisocyanate, 1,4-butane diisocyanate, and 1,6-hexamethylene diisocyanate.

Examples of the diisocyanate compound containing the alicyclic hydrocarbon represented by R include 1,4-cyclohexane diisocyanate and 4,4-cyclohexane diisocyanate. Further, Examples of the aromatic diisocyanate compound containing the aromatic hydrocarbon represented by R include 4,4'-diphenylmethane diisocyanate and tolylene diisocyanate.

These diisocyanate compounds may be used singly, or two or more kinds thereof may be used in combination.

As the short chain aliphatic hydrocarbon, the alicyclic hydrocarbon, or the aromatic hydrocarbon expressed by P' in Formula B, for example, that having a molecular weight of smaller than 500 may be used. P' is originated from a diol compound containing a short chain aliphatic hydrocarbon, an alicyclic hydrocarbon, or an aromatic hydrocarbon expressed by P'. Examples of the aliphatic diol compound containing a short chain aliphatic hydrocarbon expressed by P' include glycol, and a polyalkylene glycol, and specifically include ethylene glycol, propylene glycol, trimethylene glycol, 1,4-butanediol, 1,3-butanediol, 1,5-pentane diol, 1,6-hexane diol, 1,7-heptane diol, 1,8-octane diol, 1,9-nonane diol, and 1,10-decane diol.

Examples of the alicyclic diol compound containing an alicyclic hydrocarbon expressed by P' include cyclopentane-1,2-diol, cyclohexane-1,2-diol, cyclohexane-1,3-diol, cyclohexane-1,4-diol, and cyclohexane-1,4-dimethanol.

Further, examples of the aromatic diol compound containing an aromatic hydrocarbon expressed by P' include hydroquinone, resorcinol, chlorohydroquinone, bromohydroquinone, methylhydroquinone, phenylhydroquinone, methoxyhydroquinone, phenoxyhydroquinone, 4,4'-dihydroxybiphenyl, 4,4'-dihydroxydiphenyl ether, 4,4'-dihydroxydiphenyl sulfide, 4,4'-dihydroxydiphenyl sulfone, 4,4'-dihydroxybenzophenone, 4,4'-dihydroxydiphenyl methane, bisphenol A, 1,1-di(4-hydroxyphenyl)cyclohexane, 1,2-bis(4-hydroxyphenoxy)ethane, 1,4-dihydroxynaphthalene, and 2,6-dihydroxynaphthalene.

These may be used singly or in a combination of two or more kinds thereof.

From the standpoint of the melt-moldability, the number-average molecular weight of the polymer (i.e., polyurethane) constituting the hard segment is preferably from 300 to 1,500. Meanwhile, from the standpoints of the flexibility and thermal stability of the polyurethane-based thermoplastic elastomer, the number-average molecular weight of the polymer constituting the soft segment is preferably from 500 to 20,000, more preferably from 500 to 5,000, particularly preferably from 500 to 3,000. Further, from the standpoint of the moldability, a mass ratio (x:y) of a hard segment (x) and a soft segment (y) is preferably from 15:85 to 90:10, more preferably from 30:70 to 90:10.

The polyurethane-based thermoplastic elastomer can be synthesized by copolymerizing the polymer for forming the hard segment and the polymer for forming the soft segment by a publicly known method. As the polyurethane-based thermoplastic elastomer, for example, a thermoplastic polyurethane described in JP-ANo. H05-331256 can be used.

As the polyurethane-based thermoplastic elastomer, specifically, a combination of a hard segment composed of an aromatic diol and an aromatic diisocyanate and a soft segment composed of a polycarbonate ester is preferable, and more specifically at least one kind selected from the group consisting of a tolylene diisocyanate (TDI) / polyester-based polyol copolymer, a TDI / polyether-based polyol copolymer, a TDI / caprolactone-based polyol copolymer, a TDI / polycarbonate-based polyol copolymer, a 4,4'-diphenyl methane diisocyanate (MDI) / polyester-based polyol copolymer, a MDI / polyether-based polyol copolymer, a MDI / caprolactone-based polyol copolymer, a MDI / polycarbonate-based polyol copolymer, or a MDI+hydroquinone / poly(hexamethylene carbonate) copolymer is preferable, and at least one kind selected from the group consisting of a TDI / polyester-based polyol copolymer, a TDI / polyether-based polyol copolymer, a MDI / polyester polyol copolymer, a MDI / polyether-based polyol copolymer, or a MDI+hydroquinone / poly(hexamethylene carbonate) copolymer is more preferable.

As a commercial product for the polyurethane-based thermoplastic elastomer, for example, "ELASTOLLAN" series (for example, ET680, ET880, ET690, and ET890) produced by BASF SE, "KURAMILON U" series (for example, 2000s, 3000s, 8000s, and 9000s) produced by Kuraray Co., Ltd., and "MIRACTRAN" series (for example, XN-2001, XN-2004, P390RSUP, P480RSUI, P26MRNAT, E490, E590, and P890) produced by Nippon Miractran Co., Ltd. may be used.

- Olefin-based thermoplastic elastomer -

Examples of the olefin-based thermoplastic elastomer include a material in which at least a polyolefin forms a crystalline hard segment with a high melting temperature, and another polymer (for example, polyolefin, another polyolefin, and polyvinyl compound) forms an amorphous soft segment with a low glass transition temperature. Examples of the polyolefin forming a hard segment include polyethylene, polypropylene, isotactic polypropylene, and polybutene.

Examples of the olefin-based thermoplastic elastomer include an olefin-$\alpha$-olefin random copolymer and an olefin block copolymer, and specifically include a propylene block copolymer, an ethylene-propylene copolymer, a propylene-1-hexene copolymer, a propylene-4-methyl-1-pentene copolymer, a propylene-1-butene copolymer, an ethylene-1-hexene copolymer, an ethylene-4-methylpentene copolymer, an ethylene-1-butene copolymer, a 1-butene-1-hexene copolymer, 1-butene-4-methylpentene, an ethylene-methacrylic acid copolymer, an ethylene-methyl methacrylate copolymer, an ethylene-ethyl methacrylate copolymer, an ethylene-butyl methacrylate copolymer, an ethylene-methyl acrylate copolymer, an ethylene-ethyl acrylate copolymer, an ethylene-butyl acrylate copolymer, a propylene-methacrylic acid copolymer, a propylene-methyl methacrylate copolymer, a propylene-ethyl methacrylate copolymer, a propylene-butyl methacrylate copolymer, a propylene-methyl acrylate copolymer, a propylene-ethyl acrylate copolymer, a propylene-butyl acrylate copolymer, an ethylene-vinyl acetate copolymer, and a propylene-vinyl acetate copolymer.

Among them, as the olefin-based thermoplastic elastomer, at least one kind selected from the group consisting of a propylene block copolymer, an ethylene-propylene copolymer, a propylene-1-hexene copolymer, a propylene-4-methyl-1-pentene copolymer, a propylene-1-butene copolymer, an ethylene-1-hexene copolymer, an ethylene-4-methylpentene copolymer, an ethylene-1-butene copolymer, an ethylene-methacrylic acid copolymer, an ethylene-methyl methacrylate copolymer, an ethylene-ethyl methacrylate copolymer, an ethylene-butyl methacrylate copolymer, an ethylene-methyl acrylate copolymer, an ethylene-ethyl acrylate copolymer, an ethylene-butyl acrylate copolymer, a propylene-methacrylic acid copolymer, a propylene-methyl methacrylate copolymer, a propylene-ethyl methacrylate copolymer, a propylene-butyl methacrylate copolymer, a propylene-methyl acrylate copolymer, a propylene-ethyl acrylate copolymer, a propylene-butyl acrylate copolymer, an ethylene-vinyl acetate copolymer, or a propylene-vinyl acetate copolymer is preferable, and at least one kind selected from the group consisting of an ethylene-propylene copolymer, a propylene-1-butene copolymer, an ethylene-1-butene copolymer, an ethylene-methyl methacrylate copolymer, an ethylene-methyl acrylate copolymer, an ethylene-ethyl acrylate copolymer, or an ethylene-butyl acrylate copolymer is more preferable.

A combination of two or more kinds of the olefin-based resins, such as ethylene and propylene may be used. A content of an olefin-based resin in an olefin-based thermoplastic elastomer is preferably from 50% by mass to 100% by mass.

The number average molecular weight of the olefin-based thermoplastic elastomer is preferably from 5,000 to 10,000,000. When the number average molecular weight of the olefin-based thermoplastic elastomer is from 5,000 to 10,000,000, the mechanical properties of a thermoplastic resin material can be adequate, and processability thereof is also superior. From a similar viewpoint, the number average molecular weight of an olefin-based thermoplastic elastomer is more preferably from 7,000 to 1,000,000, and especially preferably from 10,000 to 1,000,000. In this case, the mechanical properties and processability of the thermoplastic resin material can be improved. Meanwhile, the number average molecular weight of the polymer forming the soft segment is preferably from 200 to 6,000 from viewpoints of toughness and low temperature flexibility. Further, the mass ratio (x:y) of a hard segment (x) to a soft segment (y) is preferably from 50:50 to 95:15, and more preferably from 50:50 to 90:10, from a viewpoint of formability.

An olefin-based thermoplastic elastomer can be synthesized through copolymerization by a publicly known method.

As an olefin-based thermoplastic elastomer, a thermoplastic elastomer modified with an acid may be used.

An "olefin-based thermoplastic elastomer modified with an acid" means an olefin-based thermoplastic elastomer bound with an unsaturated compound having an acidic group, such as a carboxylic acid group, a sulfuric acid group, or a phosphoric acid group.

For the binding of the unsaturated compound having an acidic group, such as a carboxylic acid group, a sulfuric acid group, or a phosphoric acid group, to the olefin-based thermoplastic elastomer, for example, an unsaturated bond moiety of an unsaturated carboxylic acid (generally maleic anhydride) is bound (e.g., grafted) as the unsaturated compound having an acidic group to the olefin-based thermoplastic elastomer.

From the standpoint of inhibiting deterioration of the olefin-based thermoplastic elastomer, the unsaturated compound having an acidic group is preferably an unsaturated compound having a carboxylic acid group, which is a weak acid group. Examples of the unsaturated compound having a carboxylic acid group include acrylic acid, methacrylic acid, itaconic acid, crotonic acid, isocrotonic acid, and maleic acid.

As a commercial product for the olefin-based thermoplastic elastomer, for example, "TAFMER" series (for example, A0550S, A1050S, A4050S, A1070S, A4070S, A35070S, A1085S, A4085S, A7090, A70090, MH7007, MH7010, XM-7070, XM-7080, BL4000, BL2481, BL3110, BL3450, P-0275, P-0375, P-0775, P-0180, P-0280, P-0480, and P-0680) produced by Mitsui Chemicals, Inc., "NUCREL" series (for example, AN4214C, AN4225C, AN42115C, N0903HC, N0908C, AN42012C, N410, N1050H, N1108C, N1110H, N1207C, N1214, AN4221C, N1525, N1560, N0200H, AN4228C, AN4213C, and N035C), and "ELVALOY AC" series (for example, 1125AC, 1209AC, 1218AC, 1609AC, 1820AC, 1913AC, 2112AC, 2116AC, 2615AC, 2715AC, 3117AC, 3427AC, and 3717AC), produced by Dupont-Mitsui Polychemicals Co., Ltd., "ACRYFT" series, "EVATATE" series, *etc.* from Sumitomo Chemical Co., Ltd., "ULTRATHENE" series, *etc.* produced by Tosoh Corporation, "PRIME TPO" series (for example, E-2900H, F-3900H, E-2900, F-3900, J-5900, E-2910, F-3910, J-5910, E-2710, F-3710, J-5910, E-2740, F-3740, R110MP, R110E, T310E, and M142E) produced by Prime Polymer Co., Ltd., *etc.* may be used.

- Polyester-based thermoplastic elastomer -

Examples of the polyester-based thermoplastic elastomer include a material in which at least a polyester forms a crystalline hard segment with a high melting temperature, and another polymer (for example, polyester, or polyether) forms an amorphous soft segment with a low glass transition temperature.

As the polyester constituting the hard segment, an aromatic polyester can be used. The aromatic polyester can be formed from, for example, an aromatic dicarboxylic acid or an ester-forming derivative thereof, and an aliphatic diol. The aromatic polyester is preferably a polybutylene terephthalate derived from 1,4-butanediol and at least one of

terephthalic acid or dimethyl terephthalate. Alternatively, the aromatic polyester may be, for example, a polyester derived from a dicarboxylic acid component (e.g., isophthalic acid, phthalic acid, naphthalene-2,6-dicarboxylic acid, naphthalene-2,7-dicarboxylic acid, diphenyl-4,4'-dicarboxylic acid, diphenoxyethane dicarboxylic acid, 5-sulfoisophthalic acid, or an ester-forming derivative of these dicarboxylic acids) and a diol having a molecular weight of 300 or less (e.g., an aliphatic diol, such as ethylene glycol, trimethylene glycol, pentamethylene glycol, hexamethylene glycol, neopentyl glycol, or decamethylene glycol; an alicyclic diol, such as 1,4-cyclohexane dimethanol or tricyclodecane dimethylol; and an aromatic diol, such as xylylene glycol, bis(*p*-hydroxy)diphenyl, bis(*p*-hydroxyphenyl)propane, 2,2-bis[4-(2-hydroxyethoxy)phenyl]propane, bis[4-(2-hydroxy)phenyl]sulfone, 1,1-bis[4-(2-hydroxyethoxy)phenyl]cyclohexane, 4,4'-dihydroxy-*p*-terphenyl, or 4,4'-dihydroxy-*p*-quaterphenyl), or a copolyester obtained by using two or more of the above-described dicarboxylic acid components and diol components. It is also possible to copolymerize, for example, a polyfunctional carboxylic acid component, a polyfunctional oxyacid component or a polyfunctional hydroxy component, which has three or more functional groups, in a range of 5% by mole or less.

Examples of the polyester constituting the hard segment include polyethylene terephthalate, polybutylene terephthalate, polymethylene terephthalate, polyethylene naphthalate, and polybutylene naphthalate, among which polybutylene terephthalate is preferable.

Examples of the polymer forming the soft segment include an aliphatic polyester and an aliphatic polyether.

Examples of the aliphatic polyether include poly(ethylene oxide) glycol, poly(propylene oxide) glycol, poly(tetramethylene oxide) glycol, poly(hexamethylene oxide) glycol, a copolymer of ethylene oxide and propylene oxide, an ethylene oxide addition polymer of poly(propylene oxide) glycol, and a copolymer of ethylene oxide and tetrahydrofuran.

Examples of the aliphatic polyester include poly($\varepsilon$-caprolactone), polyenantholactone, polycaprylolactone, poly(butylene adipate), and poly(ethylene adipate).

Among the aliphatic polyethers and the aliphatic polyesters, as the polymer forming the soft segment, poly(tetramethylene oxide) glycol, an ethylene oxide addition product of poly(propylene oxide) glycol, poly($\varepsilon$-caprolactone), poly(butylene adipate), and poly(ethylene adipate), and the like are preferable from a viewpoint of the elasticity characteristic of an obtained polyester block copolymer.

The number average molecular weight of the polymer forming the soft segment is preferably from 300 to 6,000 from viewpoints of toughness and low temperature flexibility. Further, the mass ratio (x:y) of a hard segment (x) to a soft segment (y) is preferably from 99:1 to 20:80 from a viewpoint of formability, and more preferably from 98:2 to 30:70.

Examples of a combination of the hard segment and the soft segment include the combinations of the respective hard segment and the respective soft segment described above. Among them, as the combination of the hard segment and the soft segment a combination of poly(butylene terephthalate) as a hard segment and an aliphatic polyether as a soft segment is preferable, and a combination of poly(butylene terephthalate) as a hard segment and poly(ethylene oxide) glycol as a soft segment is more preferable.

As a commercial product for the polyester-based thermoplastic elastomer, for example, "HYTREL" series (for example, 3046, 5557, 6347, 4047, and 4767) from Du Pont-Toray Co., Ltd., and "PELPRENE" series (for example, P30B, P40B, P40H, P55B, P70B, P150B, P280B, P450B, P150M, S1001, S2001, S5001, S6001, and S9001) produced by Toyobo Co., Ltd. may be used.

The polyester-based thermoplastic elastomer can be synthesized by copolymerizing the polymer for forming the hard segment and the polymer for forming the soft segment by a publicly known method.

-Other Components-

The resin material may also contain a component other than the resin as desired. Examples of such other components include rubbers, various fillers (e.g., silica, calcium carbonate, and clay), anti-aging agents, oils, plasticizers, colorants, weathering agents, and reinforcing materials.

-Physical Properties of Resin Material-

The melting point of the resin contained in the resin material is, for example, preferably from 100°C to about 350°C and, from the standpoints of durability and productivity of the tire, it is preferably from 100°C to about 250°C, more preferably from 120°C to 250°C.

The tensile modulus of elasticity, which is defined in JIS K7113:1995, of the resin material (i.e., tire frame) itself is preferably from 50 MPa to 1,000 MPa, more preferably from 50 MPa to 800 MPa, particularly preferably from 50 MPa to 700 MPa. In a case in which the tensile modulus of elasticity of the resin material is from 50 MPa to 1,000 MPa, the tire can be efficiently fitted to a rim while maintaining the shape of the tire frame.

The tensile strength, which is defined in JIS K7113 (1995), of the resin material (i.e., tire frame) itself is usually from about 15 MPa to about 70 MPa, preferably from 17 MPa to 60 MPa, more preferably from 20 MPa to 55 MPa.

The tensile strength at yield, which is defined in JIS K7113 (1995), of the resin material (i.e., tire frame) itself

is preferably 5 MPa or greater, more preferably from 5 MPa to 20 MPa, particularly preferably from 5 MPa to 17 MPa. In a case in which the tensile strength at yield of the resin material is 5 MPa or greater, the tire can endure deformation caused by a load applied to the tire during traveling or the like.

The tensile elongation at yield, which is defined in JIS K7113 (1995), of the resin material (i.e., tire frame) itself is preferably 10% or greater, more preferably from 10% to 70%, particularly preferably from 15% to 60%. In a case in which the tensile elongation at yield of the resin material is 10% or greater, a large elastic region is provided, so that favorable rim fittability can be attained.

The tensile elongation at break, which is defined in JIS K7113 (1995), of the resin material (i.e., tire frame) itself is preferably 50% or greater, more preferably 100% or greater, particularly preferably 150% or greater, most preferably 200% or greater. In a case in which the tensile elongation at break of the resin material is 50% or greater, favorable rim fittability can be attained, and the tire can be made unlikely to rupture at collision.

The deflection temperature under load (under a load of 0.45 MPa), which is defined in ISO75-2 or ASTM D648, of the resin material (i.e., tire frame) itself is preferably 50°C or higher, more preferably from 50°C to 150°C, particularly preferably from 50°C to 130°C. With the deflection temperature under load of the resin material being 50°C or higher, deformation of the tire frame can be inhibited even when vulcanization is performed in the production of the tire.

[Resin Layer]

The resin layer is a layer provided on at least a part of the inner circumferential surface of the tire frame. The resin layer is a layer not having a tire shape holding function and a load holding function.

The resin layer contains a urethane resin, and is not particularly limited as long as the tensile modulus of elasticity and the softening point meet the conditions, and may include other components such as resins other than the urethane resin or additives within the range in which the effects of the invention are not impaired.

From the viewpoint of light resistance, it is preferable that the resin layer further contains at least one selected from a triazine-based ultraviolet absorber, a hindered amine-based radical scavenger, an amine-based anti-aging agent, and carbon black as the additives.

Only one type of the additives may be added, and two or more types thereof may be used in combination.

The softening point of the resin layer is 80°C or higher, and is preferably 100°C or higher, and more preferably 120°C or higher from the viewpoint of further suppressing the resin layer from being deformed while traveling.

In the case of performing heating for the purpose of, for example, vulcanization of tread rubber after providing the resin layer on the inner circumferential surface of the tire frame in the process of manufacturing the tire, the softening point of the resin layer is more preferably 120°C or higher and particularly preferably 140°C or higher.

The upper limit of the softening point of the resin layer is not particularly limited, and may be, for example, 165°C.

Examples of means for adjusting the softening point of the resin layer include adjustments of a molecular weight of the urethane resin, a type and a mass ratio in monomer units configuring the urethane resin, an addition amount of a crosslinking agent when the urethane resin has a three-dimensional network structure by the crosslinking agent, a content of the urethane resin in the resin layer, and a type and an addition amount of additives.

Hereinafter, each component included in a resin layer, a method of forming a resin layer, characteristic of the resin layer, and the like will be described.

-Urethane Resin-

Examples of the urethane resin include a polymer of polyisocyanate and a polyol. That is, examples of the urethane resin include those containing a polyisocyanate and a polyol as a monomer unit.

It is preferable that the urethane resin contains, as a monomer unit, the polyisocyanate and at least one type selected from a polyether polyol and a polycarbonate polyol, which are described later.

From the viewpoint of forming a resin layer having a high softening point, the urethane resin preferably has a three-dimensional network structure. Examples of the urethane resin having the three-dimensional network structure include a polymer of a tri-or higher functional polyisocyanate and a tri or higher functional polyol, and a cured product of a composition containing a urethane resin before crosslinking, which is the polymer of the polyisocyanate and the polyol, and a crosslinking agent.

Examples of the polyisocyanate include an aromatic polyisocyanate, an aliphatic polyisocyanate, and an alicyclic polyisocyanate. Among these, from the viewpoint of the light resistance, the polyisocyanate is preferably the aliphatic polyisocyanate or the alicyclic polyisocyanate, and more preferably the aliphatic polyisocyanate.

Specific examples of the polyisocyanate include an isocyanate compound such as toluene diisocyanate, diphenylmethane diisocyanate, 1,6-hexamethylene diisocyanate, 2,2,4 (2,4,4)-trimethylhexamethylene diisocyanate, p-phenylene diisocyanate, 4,4'-dicyclohexylmethane diisocyanate, 3,3'-dimethyldiphenyl, 4,4'-diisocyanate, dianisidine isocyanate, m-xylene diisocyanate, hydrogenated xylene diisocyanate, 1,3-bis(isocyanatomethyl)cyclohexane, tetramethylxylene diisocyanate, isophorone diisocyanate, 1,5-naphthalene diisocyanate, 1,4-cyclohexyl diisocyanate, lysine isocyanate, dimethyltriphenylmethane tetraisocyanate, triphenylmethane triisocyanate, tris (isocyanate phenyl) thiophosphate, urethane-modified toluene diisocyanate, allophanate-modified toluene diisocyanate, burette-modified toluene diisocyanurate, isocyanurate-modified toluene diisocyanate, urethane-modified diphenylmethane diisocyanate, carbodiimide-modified diphenylmethane diisocyanate, acylurea-modified diphenylmethane diisocyanate, or polymeric diphenylmethane diisocyanate, but are not limited thereto.

Only one type of the polyisocyanate may be used, or two or more types thereof may be used in combination.

Examples of the polyol include low molecular weight polyols and high molecular weight polyols.

Specific examples of the low-molecular polyols include ethylene glycol, 1,2-propanediol, 1,3-propanediol, 1,2-butanediol, 1,3-butanediol, 1,4-butanediol, 2,3-butanediol, 2,2-dimethyl-1,3-propanediol, 1,2-pentanediol, 1,4-pentanediol, 1,5-pentanediol, 2,4-pentanediol, 3,3-dimethyl-1,2-butanediol, 2-ethyl-2-methyl-1,3-propanediol, 1,2-hexanediol, 1,5-hexanediol, 1,6-hexanediol, 2,5-hexanediol, 2-methyl-2,4-pentanediol, 1,7-heptanediol, 2-methyl-2-propyl-1,3-propanediol, 2,5-dimethyl-2,5-hexanediol, 1,2-octanediol, 1,8-octanediol, 2,2,4-trimethyl-1,3-pentanediol, propylenediol, glycerin, trimethylolpropane, 1,2,6-hexanetriol, hydrogenated bisphenol A, an ethylene oxide or propylene oxide adduct of bisphenol A, 2,2-bis(hydroxymethyl)propionic acid, 2,2-bis(hydroxymethyl)butanoic acid, 2,5,6-trimethoxy-3,4-dihydroxyhexanoic acid, and 2,3-dihydroxy-4,5-dimethoxypentanoic acid.

Examples of the high molecular weight polyols include: a polyether polyol such as polypropylene glycol, polyethylene glycol, polytetramethylene glycol, polyhexamethylene glycol, an ethylene oxide/propylene oxide copolymer, a THF/ethylene oxide copolymer, or a THF/propylene oxide copolymer; a polyester polyol such as dimethylol propionic acid, polyethylene adipate, poly (propylene adipate), poly-ε-caprolactone, or copolymers thereof; a polycarbonate polyol such as polyether ester polyol or a polycarbonate ester compound (for example, polyhexamethylene carbonate diol and the like); a hydrocarbon skeleton polyol; and polyadducts thereof, but are not limited thereto.

Only one type of the polyols may be used, or two or more types thereof may be used in combination.

Among these, from the viewpoint of mechanical followability to a frame, the polyol is preferably the high molecular weight polyol, and from the viewpoint of water resistance, the polyol is preferably the polyether polyol and the polycarbonate polyol.

When the urethane resin is the cured product of the composition containing the urethane resin before the crosslinking and the crosslinking agent, examples of the urethane resin before the crosslinking include those having a polar group that causes a crosslinking reaction with a functional group of the crosslinking agent.

Examples of the polar group include a carboxyl group, a carbonyloxycarbonyl group, an epoxy group, a hydroxy group, an oxy group, an ester group, a silanol group, a silyl group, an amino group, a nitrile group, and a sulfo group. Examples of the polar group may be a hydroxy group remaining without reaction after the reaction of the polyisocyanate and the polyol.

Examples of the crosslinking agent include compounds having two or more functional groups that form a bond by reacting with the polar group, in one molecule. Specific examples of the crosslinking agent include an epoxy compound, a carbodiimide compound, an oxazoline compound, and an isocyanate compound.

Only one type of the crosslinking agent may be used, or two or more types thereof may be used in combination.

Specific examples of the epoxy compound include: a diepoxy compound obtained by etherfication of 1 mol of glycol such as ethylene glycol, diethylene glycol, triethylene glycol, polyethylene glycol, propylene glycol, dipropylene glycol, 1,4-butanediol, 1,6-hexane glycol, or neopentyl glycol and 2 mols of epichlorohydrin; a polyepoxy compound obtained by etherfication of 1 mol of polyhydric alcohol such as glycerin, polyglycerin, trimethylolpropane, pentaerythritol, or sorbitol and 2 mols or more of epichlorohydrin; and a diepoxy compound obtained by esterification of 1 mol of dicarboxylic acid such as phthalic acid, terephthalic acid, oxalic acid, or adipic acid and 2 mols of epichlorohydrin.

Examples of the carbodiimide compound include compounds having two or more carbodiimide groups in one molecule, which are produced from organic isocyanate such as organic monoisocyanate, organic diisocyanate, or organic triisocyanate.

Examples of the organic isocyanate include the aromatic isocyanate, the aliphatic isocyanates, and mixtures thereof. The organic groups that are included in the organic isocyanate, may be any of the aromatic organic group and the aliphatic organic group or may be a combination of the aromatic organic group and the aliphatic organic group. Among these, from the viewpoint of reactivity, the organic isocyanate having the aliphatic organic group is particularly preferable.

The carbodiimide compound is normally synthesized by a condensation reaction of the organic diisocyanate.

Specific examples of the organic isocyanate include organic diisocyanate such as 4,4'-diphenylmethane diisocyanate, 4,4-diphenyldimethylmethane diisocyanate, 1,4-phenylene diisocyanate, 2,4-tolylene diisocyanate, 2,6-tolylene diisocyanate, hexamethylene diisocyanate, cyclohexane diisocyanate, xylylene diisocyanate 2,2,4-trimethylhexamethylene diisocyanate, 4,4'-dicyclohexylmethane diisocyanate, or 1,3-phenylene diisocyanate; and organic monoisocyanate such as isophorone isocyanate, phenyl isocyanate, cyclohexyl isocyanate, butyl isocyanate, or naphthyl isocyanate.

Examples of the oxazoline compound include a polymer that has an oxazoline group.

The oxazoline compound can be produced, for example, by solution polymerization of a monomer component containing an addition polymerizable oxazoline and, if necessary, any unsaturated monomer in an aqueous medium by the known polymerization method.

Specific examples of the addition polymerizable oxazoline include 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline, and 2-isopropenyl-5-ethyl-2-oxazoline. Only one type of the addition polymerizable oxazoline may be used, or two or more types thereof may be used in combination.

Any unsaturated monomer that can be used to produce the oxazoline compound is a monomer that can be copolymerized with addition polymerization oxazoline and does not react with an oxazoline group.

Examples of the isocyanate compound include compounds containing two or more isocyanate groups in one molecule. Specific examples of the isocyanate compound include a polyisocyanate described above. Only one type of the isocyanate compound may be used, or two or more types thereof may be used in combination.

The addition amount of the crosslinking agent with respect to 100 parts by mass of urethane resin before crosslinking is also changed depending on the types of crosslinking agent, but may be, for example, from 2 parts by mass to 20 parts by mass, and the addition amount of the crosslinking agent is preferably from 3 parts by mass to 15 parts by mass from the viewpoint of adjusting the softening point of the resin layer to 80°C or higher and from the viewpoint of taking a balance of other property values of the resin layer.

A swelling ratio indicating the degree of crosslinking in the urethane resin having the three-dimensional network structure is from 1.0 mass times to 10 mass times, and preferably from 2.0 mass times to 8.0 mass times from the viewpoint of the heat resistance of the urethane resin. The higher the swelling ratio, the lower the crosslinking density of the urethane resin, and the lower the swelling ratio, the higher the crosslinking density of the urethane resin.

The measurement of the swelling ratio is performed as follows. Specifically, after 100 parts by mass of the urethane resin is immersed in a tetrahydrofuran solvent at 25°C for 48 hours, a swelled body is taken out from the tetrahydrofuran solvent, an increasing ratio (mass times) in the mass of the urethane resin is obtained from the mass of the urethane resin (that is, a "tetrahydrofuran-swelled body of the urethane resin" containing tetrahydrofuran to the urethane resin) after lightly wiping the surface, and the obtained value is defined as a "swelling ratio (mass times)." That is, when the mass of the urethane resin before the swelling is Mb and the mass of the urethane resin (the tetrahydrofuran swelled body of the urethane resin) after the swelling is Ma, the swelling ratio (mass times) is expressed by the following Formula.

$$\text{Formula: Swelling ratio (mass times)} = Ma/Mb$$

Examples of a weight average molecular weight of the urethane resin are from 2000 to 1000000, preferably from 5000 to 500000, and more preferably from 10000 to 200000.

The measurement of the weight average molecular weight is performed using gel permeation chromatography (GPC, model number: HLC-8320GPC, manufactured by Tosoh Corporation). The weight average molecular weight is obtained using an RI detector under the measurement conditions that column: TSK-GEL Super HM-M (manufactured by Tosoh Corporation), developing solvent: 1,1,1,3,3,3-hexafluoro-2-propanol (manufactured by Wako Pure Chemical Industries, Ltd.), column temperature: 40°C, and flow rate: 0.3 ml/min.

The content of the urethane resin in the resin layer is preferably 30% by mass or greater, more preferably 50% by mass or greater, and still more preferably 60% by mass or greater with respect to the whole resin layer.

-Triazine-Based Ultraviolet Absorber-

Atriazine-based ultraviolet absorber is an ultraviolet absorber having a triazine skeleton.

Specific examples of the triazine-based UV absorber include 2-(2-hydroxy-4-hydroxymethylphenyl)-4,6-diphenyl-s-triazine, 2-(2-hydroxy-4-hydroxymethylphenyl)-4,6-bis(2,4-dimethylphenyl)-s-triazine, 2-[2-hydroxy-4-(2-hydroxyethyl)phenyl]-4,6-diphenyl-s-triazine, 2-[2-hydroxy-4-(2-hydroxyethyl)phenyl]-4,6-bis(2,4-dimethylphenyl)-s-triazine, 2-[2-hydroxy-4-(2-hydroxyethoxy)phenyl]-4,6-diphenyl-s-triazine, 2-[2-hydroxy-4-(2-hydroxyethoxy) phenyl]-4,6-bis(2,4-dimethylphenyl)-s-triazine, 2-[2-hydroxy-4-(3-hydroxypropyl)phenyl]-4,6-diphenyl-s-triazine, 2-[2-hydroxy-4-(3-hydroxypropyl) phenyl]-4,6-bis(2,4-dimethylphenyl)-s-triazine, 2-[2-hydroxy-4-(3-hydroxypropoxy)phenyl]-4,6-diphenyl-s-triazine, 2-[2-hydroxy-4-(3-hydroxypropoxy)phenyl]-4,6-bis(2,4-dimethylphenyl)-s-triazine, 2-[2-hydroxy-4-(4-hydroxybutyl)phenyl]-4,6-diphenyl-s-triazine, 2-[2-hydroxy-4-(4-hydroxybutyl)phenyl]-4,6-bis(2,4-dimethylphenyl)-s-triazine, 2-[2-hydroxy-4-(4-hydroxybutoxy)phenyl]-4,6-diphenyl-s-triazine, 2-[2-hydroxy-4-(4-hydroxybutoxy)phenyl]-4,6-bis(2,4-dimethylphenyl)-s-triazine, 2-(2-hydroxy-4-hydroxymethylphenyl)-4,6-bis(2-hydroxy-4-methylphenyl)-s-triazine, 2-[2-hydroxy-4-(2-hydroxyethyl) phenyl]-4,6-bis(2-hydroxy-4-methylphenyl)-s-triazine, 2-[2-hydroxy-4-(2-hydroxyethoxy) phenyl]-4,6-bis(2-hydroxy-4-methylphenyl)-s-triazine, 2-[2-hydroxy-4-(3-hydroxypropyl) phenyl]-4,6-bis(2-hydroxy-4-methylphenyl)-s-triazine, 2-[2-hydroxy-4-(3-hydroxypropoxy) phenyl]-4,6-bis(2-hydroxy-4-methylphenyl)-s-triazine, 2-[4,6-bis(2,4-dimethylphenyl)-1,3,5-triazin-2-yl]-5-(octyloxy)phenol, and 2-(4,6-diphenyl-1,3,5-triazin-2-yl)-5-[(hexyl)oxy]-phenol.

The triazine-based ultraviolet absorber is preferably a compound represented by the following General Formula (4).

GENERAL FORMULA (4)

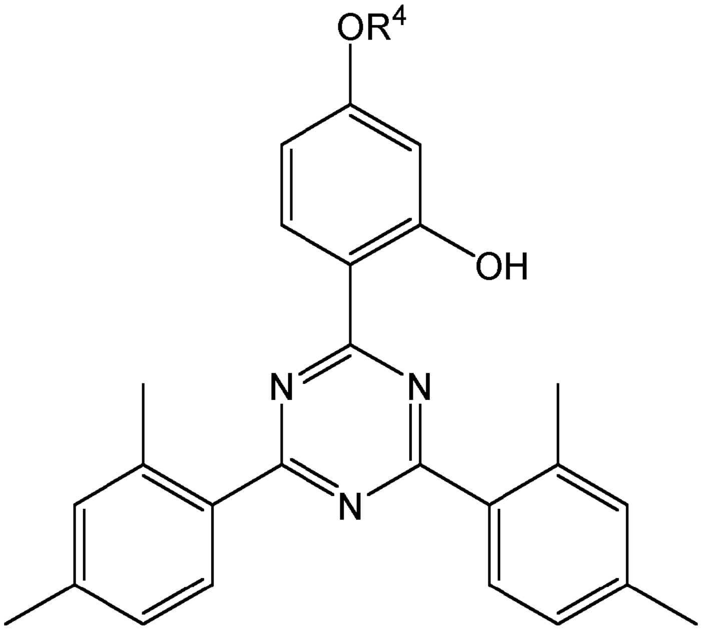

In General Formula (4), $R^4$ represents a linear or branched substituted or unsubstituted alkyl group having from 1 to 20 carbon atoms, or a linear or branched substituted or unsubstituted alkyloxy alkylene group having from 2 to 21 carbon atoms.

Examples of substituents of the alkyl group or the alkyloxy alkylene group represented by $R^4$ in General Formula (4) include a hydroxy group.

The alkyloxy alkylene group represented by $R^4$ in General Formula (4) is represented by, for example, $R^{41}$-O-$L^{42}$-. Here, $R^{41}$ represents a linear or branched alkyl group having from 1 to 20 carbon atoms, $L^{42}$ represents a linear or branched alkylene group having from 1 to 20 carbon atoms, and the total carbon atoms of $R^{41}$ and $L^{42}$ are 2 to 21.

Among these, $R^4$ in General Formula (4) is a linear unsubstituted alkyl group having from 1 to 7 carbon atoms, $R^{41}$ is a linear alkyl group having from 1 to 18 carbon atoms, and $L^{42}$ is preferably a substituted alkyloxy alkylene group which is-$CH_2CH(OH)CH_2$-.

Only one type of the triazine-based ultraviolet absorber may be used, or two or more types thereof may be used in combination.

In a case in which the resin layer contains the triazine-based ultraviolet absorber, the light resistance of the tire is improved. Therefore, for example, in a case in which a vehicle mounted with a tire keeps traveling after sunlight is continuously emitted to the inner circumferential surface of the tire frame, the occurrence of cracks on the inner circumferential surface of the tire frame is suppressed and the durability of the tire is improved.

A content of the triazine-based ultraviolet absorber with respect to the whole resin layer is, for example, from 2% by mass to 20% by mass, and is preferably from 2% by mass to 20% by mass and more preferably from 2% by mass to 10% by mass from the viewpoint of the light resistance and the solubility to the urethane resin.

-Hindered Amine-Based Radical Scavenger-

Examples of the hindered amine-based radical scavenger include amines having a substituent on both sides of the amino group, and among these, include saturated heterocyclic amines at which 2, 6 positions are substituted.

Specific examples of the hindered amine-based radical scavenger include 2-(3,5-di-tert-butyl-4-hydroxybenzyl)-2'-n-butyl malonate bis(1,2,2,6,6-pentamethyl-4-piperidyl), bis(2,2,6,6-tetramethyl-4-piperidyl)sebacate, bis(1,2,2,6,6-pentamethyl-4-piperidyl)sebacate, and tetrakis (2,2,6,6-tetramethyl-4-piperidyl)-1,2,3,4-butanetetracarboxylate.

The hindered amine-based radical scavenger is preferably a compound represented by the following General Formula (5).

GENERAL FORMULA (5)

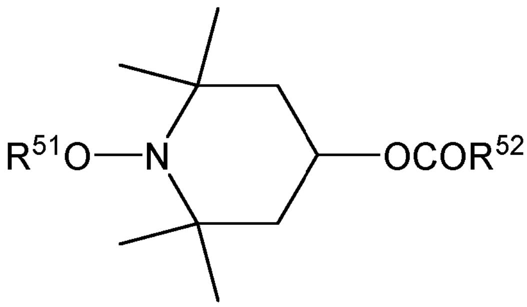

In General Formula (5), $R^{51}$ represents a hydrogen atom or a linear or branched unsubstituted alkyl group having from 1 to 36 carbon atoms, and $R^{52}$ represents a linear or branched unsubstituted alkyl group having from 1 to 36 carbon atoms or represents a group represented by the following General Formula (6).

GENERAL FORMULA (6)

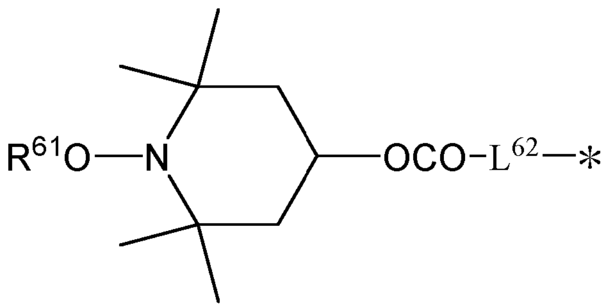

In General Formula (6), $R^{61}$ represents a hydrogen atom or a linear or branched unsubstituted alkyl group having from 1 to 36 carbon atoms, $L^{62}$ represents a linear or branched unsubstituted alkylene group having from 1 to 36 carbon atoms, and * represents a binding position.

$R^{51}$ in General Formula (5) is preferably a linear alkyl group having from 1 to 36 carbon atoms.

$R^{52}$ in General Formula (5) is preferably a linear alkyl group having from 1 to 36 carbon atoms or is a group represented by General Formula (6).

$R^{61}$ in General Formula (6) is preferably the same group as $R^{51}$ in General Formula (5).

$L^{62}$ in General Formula (6) is preferably a linear alkylene group having from 1 to 36 carbon atoms.

In the compound represented by General Formula (5), it is preferable that $R^{52}$ is a group represented by General Formula (6), $R^{61}$ in General Formula (6) is the same group as $R^{51}$ in General Formula (5), and $L^{62}$ in General Formula (6) is a linear alkylene group having from 1 to 36 carbon atoms.

Only one type of the hindered amine-based radical scavenger may be used or two or more types thereof may be used in combination.

In a case in which the resin layer contains the hindered amine-based radical scavengers, the light resistance of the tire is improved. Therefore, for example, in a case in which a vehicle mounted with a tire keeps traveling after sunlight is continuously emitted to the inner circumferential surface of the tire frame, the occurrence of cracks on the inner circumferential surface of the tire frame is suppressed and the durability of the tire is improved.

A content of the hindered amine-based radical scavenger with respect to the whole resin layer is, for example, a range from 0.1% by mass to 10% by mass, and is preferably from 0.5% by mass to 10% by mass and more preferably 1% by mass to 8% by mass from the viewpoint of the light resistance and the solubility to the urethane resin.

-Amine-Based Anti-Aging Agent -

Examples of the amine-based anti-aging agent include phenyl-a-naphthylamine (PAN), octyl diphenylamine,

N,N'-diphenyl-p-phenylenediamine (DPPD), N, N'-di-β-naphthyl-p-phenylenediamine (DNPD), N-(1,3-dimethylbutyl)-N'-phenyl-p-phenylenediamine, N-phenyl-N'-isopropyl-p-phenylenediamine (IPPN), N,N'-diallyl-p-phenylenediamine, a phenothiazine derivative, a diallyl-p-phenylenediamine mixture, alkylated phenylenediamine, 4,4'-bis(a,a-dimethylbenzyl)diphenylamine, N-phenyl-N'-(3-methacryloyloxy-2-hydropropyl)-p-phenylenediamine, a diallylphenylenediamine mixture, a diallyl-p-phenylenediamine mixture, N-(1-methylheptyl)-N'-phenyl-p-phenylenediamine, and a diphenylamine derivative.

Only one type of the amine-based anti-aging agent may be used or two or more types thereof may be used in combination.

In a case in which the resin layer contains the amine-based anti-aging agents, the light resistance of the tire is improved. Therefore, for example, in a case in which a vehicle mounted with a tire keeps traveling after sunlight is continuously emitted to the inner circumferential surface of the tire frame, the occurrence of cracks on the inner circumferential surface of the tire frame is suppressed and the durability of the tire is improved.

A content of the amine-based anti-aging agent with respect to the whole resin layer is, for example, from 0.1% by mass to 10% by mass, and is preferably from 0.1% by mass to 10% by mass and more preferably from 0.5% by mass to 5% by mass from the viewpoint of the light resistance and the solubility to the urethane resin.

-Carbon Black-

Examples of the carbon black include furnace black obtained by a furnace method, channel black obtained by a channel method, acetylene black obtained by an acetylene method, and thermal black obtained by a thermal method. The type of the carbon blacks is not particularly limited, and only one type of the carbon black may be used or two or more types thereof may be used in combination.

A particle size of the carbon black is not particularly limited, and for example, an average particle size thereof is from 0.03 μm to 20 μm, preferably from 0.05 μm to 10 μm, and more preferably from 0.1 μm to 5 μm. Two or more types of the carbon blacks having different average particle sizes may be used in combination.

In a case in which the resin layer contains the carbon black, the light resistance of the tire is improved, the softening point of the resin layer can be increased, and a surface resistance value of the resin layer described later can be adjusted.

A content of carbon black with respect to the whole resin layer is, for example, from 0.1% by mass to 20% by mass, and is preferably from 4.5% by mass to 17% by mass and more preferably from 10% by mass to 14.5% by mass from the viewpoint of the light resistance and the adjustment of the softening point of the resin layer.

-Other Additives-

Examples of other additives include an antistatic agent, a plasticizer, an antioxidant such as an amine-based antioxidant, a phenol-based antioxidant, a sulfur-based antioxidant, or a phosphorus-based antioxidant, a radical scavenger, an ozone inhibitor, a leveling agent, a thickener, a colorant, a foaming agent, an anti-foaming agent, and an anti-settling agent.

It is preferable that the resin layer further contains an antistatic agent.

Examples of the antistatic agent include glycerin, polyvinyl alcohol, polyethylene glycol, polypropylene glycol, alkyl sulfate, sucrose fatty acid ester, and glycerin fatty acid ester.

Among the antistatic agents, the resin layer more preferably includes at least one selected from glycerin, polyvinyl alcohol, polyethylene glycol, polypropylene glycol, and alkyl sulfate from the viewpoint of solubility to the polyurethane resin, mixing property, and hydrophilicity of the antistatic agent.

A weight average molecular weight of the polyvinyl alcohol is, for example, from 500 to 10000, a number average molecular weight of the polyethylene glycol is, for example, from 100 to 2000, and a number average molecular weight of the polypropylene glycol is, for example, from 100 to 2000.

The measurement of the weight average molecular weight and the number average molecular weight is performed using gel permeation chromatography (GPC, model number: HLC-8320GPC, manufactured by Tosoh Corporation). The measurement conditions are that column: TSK-GEL Super HM-M (manufactured by Tosoh Corporation), developing solvent: 1,1,1,3,3,3-hexafluoro-2-propanol (manufactured by Wako Pure Chemical Industries, Ltd.), column temperature: 40°C, and flow rate: 0.3 ml/min. The weight average molecular weight and the number average molecular weight are obtained using the RI detector.

Examples of the alkyl sulfate include sodium dodecyl sulfate, sodium lauryl sulfate, sodium dodecyl benzene sulfate, sodium lauryl benzene sulfate, sodium poly(oxyethylene)dodecyl ether sulfate ester, potassium dodecyl sulfate, potassium lauryl sulfate, potassium dodecyl benzene sulfate, potassium lauryl benzene sulfate, and potassium poly(oxyethylene)dodecyl ether sulfate.

Examples of the sucrose fatty acid ester include sucrose laurate ester (for example, sucrose monolaurate ester

to sucrose pentalaurate ester and the like), sucrose palmitate ester (for example, sucrose monopalmitate ester to sucrose pentapalmitate ester and the like), sucrose stearate ester (for example, sucrose monostearate ester to sucrose pentastearate ester and the like), sucrose behenate ester (for example, sucrose monobehenate ester to sucrose pentabehenate ester and the like), and sucrose oleate ester (for example, sucrose monooleate ester to sucrose pentaoleate ester and the like).

Examples of the glycerin fatty acid ester include an ester of glycerin and a saturated or unsaturated fatty acid having from 8 to 24 carbon atoms, and specifically, include glycerin caprylate ester (for example, glycerin monocaprylate ester, glycerin dicaprylate ester, and the like), glycerin laurate ester (for example, glycerin monolaurate ester, glycerin dilaurate ester, and the like), glycerin stearate ester (for example, glycerin monostearate ester, glycerin distearate ester, and the like), glycerin behenate ester (for example, glycerin monobehenate ester, glycerin dibehenate ester, and the like), and glycerin oleate ester (for example, glycerin monooleate ester, glycerin dioleate ester, and the like).

Only one type of the antistatic agent may be used or two or more types thereof may be used in combination.

In a case in which the resin layer contains the antistatic agent, the accumulation of static electricity is suppressed, and adhesion of dust and the like due to the static electricity is suppressed.

A content of the antistatic agent with respect to the whole resin layer is, for example, from 1% by mass to 50% by mass, and is preferably from 1% by mass to 30% by mass and more preferably from 2% by mass to 20% by mass, from the viewpoint of antistaticity and water resistance.

-Formation of Resin Layer-

A method of forming a resin layer is not particularly limited, and any known method may be applied.

Specifically, for example, first, a coating liquid for forming a resin layer such as a dispersion liquid in which a monomer forming a urethane resin is dispersed in a solvent, a dispersion liquid in which the urethane resin itself is dispersed, or a dispersion liquid in which the urethane resin before crosslinking and a crosslinking agent are dispersed in a solvent is prepared. For example, after a coating film is formed by applying the coating liquid for forming a resin layer to a resin layer formation position on the inner circumferential surface of the tire frame, the coating film is dried if necessary to remove the solvent and the coating film is cured by heating if necessary, thereby forming the resin layer.

The coating liquid for forming a resin layer may contain the above-described additives if necessary.

The solvent contained in the coating liquid for forming a resin layer is not particularly limited, and is preferably an aqueous solvent.

A solid content concentration in the coating liquid for forming a resin layer is not particularly limited, and has, for example, a range from 20% by mass to 90% by mass from the viewpoint of workability.

A drying temperature for drying the coating film of the coating liquid for forming a resin layer is not particularly limited, and is, for example, from 10°C to 80°C, and a drying time is, for example, from 2 minutes to 3 days. A heating temperature for curing the coating film of the coating liquid for forming a resin layer varies with compositions and the like of the coating liquid for forming a resin layer to be used, and is, for example, from 40°C to 150°C, and the heating time is, for example, from 1 minute to 300 minutes.

As described below, in a case of passing through a vulcanization step in the process of producing a tire, the heating in the vulcanization step may serve as heating for curing the coating film. The vulcanization temperature in the vulcanization step is, for example, from 100°C to 200°C, and the vulcanization time is, for example, from 5 minutes to 240 minutes.

-Thickness and Characteristics of Resin Layer-

A thickness of a resin layer is not particularly limited, and is preferably from 1 μm to 1000 μm, more preferably from 1 μm to 400 μm, still more preferably from 5 μm to 200 μm, and particularly preferably from 10 μm to 150 μm from the viewpoint of crack suppression.

In a case in which the thickness of the resin layer is within the range, the effect of suppressing cracks on the inner circumferential surface of the tire frame can be easily obtained as compared to a case in which the thickness of the resin layer is thinner than the range. In a case in which the thickness of the resin layer is within the range, as compared to a case in which the thickness of the resin layer is thicker than the range, the resin layer is less likely to be peeled due to repeated expansion and contraction of the urethane resin by impact applied while traveling and the effect of the crack suppression tends to be continued.

The thickness of the resin layer is preferably 0.2 times or less the thickness of the tire frame, more preferably 0.1 times or less, and still more preferably from 0.001 times to 0.07 times, from the viewpoint of the tire durability.

As described above, a tensile modulus of elasticity of the resin layer is 0.01 to 0.50 times the tensile modulus of elasticity of the tire frame, and is preferably from 0.02 times to 0.50 times, more preferably from 0.04 times to 0.20 times, and still more preferably from 0.05 times to 0.20 times from the viewpoint of the crack suppression.

As described above, the tensile modulus of elasticity of the resin layer is from 2 MPa to 50 MPa, and is preferably from 2.5 MPa to 40 MPa and more preferably from 3 MPa to 40 MPa from the viewpoint of the crack suppression.
Examples of methods of setting the tensile modulus of elasticity of the resin layer to the range include a method of selecting a monomer type forming a urethane resin, a method of adjusting a molecular weight of a urethane resin, a method of adjusting an addition amount of a crosslinking agent, and a method of adjusting a type and an addition amount of additives.
A surface resistance value of the resin layer is preferably from $1.0 \times 10^4$ Ω/sq to $2.0 \times 10^{10}$ Ω/sq, more preferably from $2.0 \times 10^4$ Ω/sq to $1.5 \times 10^{10}$ Ω/sq, and still more preferably from $5.0 \times 10^4$ Ω/sq to $1.0 \times 10^{10}$ Ω/sq from the viewpoint of the suppression of accumulation of static electricity.
Examples of methods of setting the surface resistance value of the resin layer to the range include a method of adjusting a content of carbon black and a method of adjusting a type and content of the above-described antistatic agent.

-Position of Resin Layer-

The resin layer is provided on at least a part of the inner circumferential surface of the tire frame, and as a result, the occurrence of cracks is suppressed, and the resin layer is preferably provided on at least a part of the inner circumferential surface on a side portion, in particular, in the tire frame. Since the side portion of the tire frame is particularly susceptible to impact from a road surface while traveling as compared to other positions thereof, in a case in which the resin layer is provided on the inner circumferential surface of the side portion of the tire frame, the occurrence of cracks is easily suppressed.
The resin layer may be provided on a part of the inner circumferential surface of the side portion of the tire frame, or may be provided on the entire inner circumferential surface of the side portion thereof. The resin layer may be provided on the inner circumferential surface in locations (for example, a crown portion and the like) other than the side portion, or may be provided on the inner circumferential surface in both the side portion and locations other than the side portion. However, from the viewpoint of suppressing the deterioration (that is, the deterioration in the resin contained in the tire frame) due to light being emitted to the inner circumferential surface of the tire frame, the resin layer is preferably provided on the entire inner circumferential surface of the tire frame.
The resin layer may be provided in contact with the inner circumferential surface of the tire frame, or may be provided via another layer (for example, an adhesive layer or the like).

Here, the side portion means a portion from a bead portion to a tread end.

The tread end indicates an outermost contact portion in a tire width direction when the tire is mounted on a standard rim specified in JATMA YEAR BOOK (2009 edition, Japan Automobile Tire Association Standard), is filled with, as an internal pressure, 100% of an air pressure (that is, a maximum air pressure) corresponding to a maximum load capacity (that is, a load indicated in boldface of an internal pressure-load capacity corresponding table) in applied size and ply rating in JATMA YEAR BOOK, and is loaded with the maximum load capacity. When the TRA standard or the ETRTO standard is applied at a use location or a production location, the tire follows each standard.
The bead portion means a portion from a tire radial inside end to 30% of a tire cross-section height.
The crown portion means a portion from one tread end to the other tread end.

[Other Members]

The tire may also include members other than the tire frame if necessary. For example, a reinforcing member disposed or embedded on the outer circumference of the tire frame to reinforce the tire frame may also be provided. Examples of the reinforcing member include one obtained by coating a metal member such as a steel cord, with a resin material. The resin material with which the metal member is coated is not particularly limited, and preferably contains a thermoplastic elastomer from the viewpoint of the elasticity required at the time of traveling the tire, the moldability at the time of production and the like. When the coating resin of the reinforcement member is heated to be welded to the tire frame, the resin material with which the metal member is coated preferably contains a resin of the same type as the resin of the resin material that forms a main body of the tire frame. The "same type" means one having a skeleton that is common to the skeleton forming the main chain of the resin, like esters and the like.
In an embodiment, the reinforcing member having the structure in which the metal member is coated with the resin material for coating via an adhesive (that is, an adhesive layer) may be disposed on the tire frame. In this case, Martens hardness (d1) of the tire frame, Martens hardness (d2) of the layer of the resin material for coating, and Martens hardness (d3) of the adhesive layer preferably meet a relationship $d1 \leq d2 < d3$. A difference in rigidity between the resin material that form the tire frame and the metal member is effectively relieved by setting the Martens hardness of the layer of the resin material for coating to be smaller than the Martens hardness of the adhesive layer and larger than

or equal to the Martens hardness of the tire frame. As a result, the durability of the tire can be further improved.

Hereinafter, the embodiments of the tire of the invention will be described with reference to the drawings.

[First Embodiment]

Fig. 1A is a perspective view showing a cross section of a part of a tire 10 of the embodiment. Fig. 1B is a cross-sectional view of a bead portion when the tire 10 of the embodiment is mounted on a rim. As shown in Fig. 1A, the tire 10 has a cross-sectional shape substantially similar to that of a conventional general pneumatic tire made of rubber. As shown in Fig. 1A, the tire 10 has a tire case 17 that includes a pair of bead portions 12 in contact with a bead sheet 21 and a rim flange 22 of a rim 20 shown in Fig. 1B, side portions 14 extending outward in a tire radial direction from the bead portions 12, and a crown portion 16 (outer circumferential portion) connecting between an outer side end in the tire radial direction of one side portion 14 and an outer side end in the tire radial direction of the other side portion 14.

The tire case 17 corresponds to the above-described tire frame and is made of the above-described resin material. To reinforce each portion of the tire case 17, a reinforcing material (for example, a fiber made of a polymer material or metal, a cord, a non-woven fabric, a woven fabric, and the like) may be embedded.

The tire case 17 of the embodiment is formed by producing two tire case half bodies (that is, tire frame pieces) having a shape in which a tread width is equally divided along a circumferential direction of the tire case 17 and bonding the half bodies to each other at an equatorial surface portion of the tire. The tire case 17 is not limited to one formed by bonding two members, and may be formed by bonding three or more members.

The tire case half body can be produced, for example, by a method such as vacuum molding, pressure molding, injection molding, or melt casting. For this reason, compared with a case in which the tire case is molded with rubber as in the past, it is not necessary to perform vulcanization, and it is possible to greatly simplify the production process and omit the molding time.

In the embodiment, an annular bead core 18 is embedded in the bead portion 12 shown in Fig. 1B as in the conventional general pneumatic tire. In the embodiment, a steel cord is used as the bead core 18, but an organic fiber cord, a resin-coated organic fiber cord, a hard resin cord, and the like may be used. If the rigidity of the bead portion 12 is secured and there is no problem in fitting with the rim 20, the bead core 18 may be omitted.

In the embodiment, a portion contacting the rim 20 of the bead portion 12 or at least a portion contacting a rim flange 22 of the rim 20 is provided with an annular seal layer 24 made of a material having more excellent sealability than a resin material forming the tire case 17. The seal layer 24 may be formed also on a portion where the tire case 17 (bead portion 12) and the bead sheet 21 are in contact with each other. The seal layer 24 may be omitted as long as the sealability to the rim 20 can be secured only by the resin material forming the tire case 17. Examples of the material having the more excellent sealability than that of the resin material forming the tire case 17 include a material softer than the resin material forming the tire case 17 such as rubber, or a thermoplastic resin and a thermoplastic elastomer softer than the resin material.

As shown in Fig. 1A, a resin layer 15 is provided on an inner circumferential surface of the tire case 17. The resin layer 15 corresponds to the above-described resin layer, and is a layer that contains at least a urethane resin and has a softening point of 80°C or higher.

In the embodiment, the resin layer 15 is provided over the entire inner circumferential surface of the tire case 17, but the form of the resin layer 15 is not limited thereto. The resin layer 15 may be partially provided, for example, only on the inner circumferential surface of the side portion 14, partially provided at locations (for example, inside of a boundary part between the side portion and the thread portion, and the like) where cracks are particularly likely to occur on the inner circumferential surface of the side portion 14, or may be provided in a shape such as a lattice or stripe shape. The resin layer 15 may be provided only on the inner circumferential surface of the crown portion 16 or may be provided only on the inner circumferential surface of the side portion 14 and the crown portion 16. The resin layer 15 may be provided on at least a part of the inner circumferential surface of the tire case 17, and may be provided on other locations (for example, the outer circumferential surface) in addition to the inner circumferential surface thereof.

In the embodiment, the resin layer 15 is provided in contact with the inner circumferential surface of the tire case 17, but may be provided on the inner circumferential surface of the tire case 17 via another layer (for example, an adhesive layer and the like).

As shown in Fig. 1A, a reinforcing cord 26 having rigidity higher than that of the resin material forming the tire case 17 is wound around the crown portion 16 in the circumferential direction of the tire case 17. The reinforcing cord 26 is spirally wound in a state in which at least a portion the reinforcing cord is embedded in the crown portion 16 in a cross-sectional view along an axial direction of the tire case 17, and forms a reinforcing cord layer 28. The outer circumferential side of the reinforcing cord layer 28 in the tire radial direction is provided with a tread 30 made of a material, for example, rubber, which is more excellent in wear resistance than the resin material forming the tire case 17.

In the embodiment, as shown in Fig. 2, the reinforcing cord 26 is a coated cord member in which a metal member 26A such as a steel cord is coated with a resin material 27 for coating. In the embodiment, the same resin

material as the resin material forming the tire case 17 is used as the resin material 27 for coating, but another thermoplastic resin or thermoplastic elastomer may be used. The reinforcing cord 26 is bonded at a contact part with the crown portion 16 by a method such as welding or adhesion with an adhesive. The reinforcing cord 26 may be a steel cord or the like in a state of not being coated with the resin material 27 for coating.

The tensile modulus of elasticity of the resin material 27 for coating is preferably set in a range from 0.1 times to 10 times the tensile modulus of elasticity of the resin material forming the tire case 17. If the tensile modulus of elasticity of the resin material 27 for coating is 10 times or less the tensile modulus of elasticity of the resin material forming the tire case 17, the crown portion does not become too hard, and the rim assembling property becomes easy. When the tensile modulus of elasticity of the resin material 27 for coating is 0.1 times or more the tensile modulus of elasticity of the resin material forming the tire case 17, the resin forming the reinforcing cord layer 28 is not too soft, belt in-plane shear rigidity is excellent, and a cornering force is improved.

In the embodiment, as shown in Fig. 2, the reinforcing cord 26 has a substantially trapezoidal cross-sectional shape. Hereinafter, an upper surface (that is, an outer surface in the tire radial direction) of the reinforcing cord 26 is denoted by reference numeral 26U, and a lower surface (that is, an inner surface in the tire radial direction) thereof is denoted by reference numeral 26D. In the embodiment, the cross-sectional shape of the reinforcing cord 26 is a substantially trapezoidal shape, but the invention is not limited to this shape, and the cross-sectional shape may take any shape as long as the cross-sectional shape is a shape other than a shape to be wide from the lower surface 26D side (that is, the inner side in the tire radial direction) toward the upper surface 26U side (that is, the outer side in the tire radial direction).

As shown in Fig. 2, since the reinforcing cords 26 are spaced apart from each other in the circumferential direction, a gap 28A is formed between the reinforcing cords 26 adjacent to each other. For this reason, an outer circumferential surface 17S of the reinforcing cord layer 28 has a shape having irregularities.

Finely roughened irregularities 96 are provided on the outer circumferential surface 17S (including irregularities) of the reinforcing cord layer 28 and the outer circumferential surface of the tire case 17 in the gap 28A between the reinforcing cords 26, and a cushion rubber 29 is bonded thereon via a bonding agent. The cushion rubber 29 flows so as to fill the roughened irregularities 96 on the contact surface between the reinforcing cord 26 and the tire case 17.

The above-described tread 30 is bonded on the cushion rubber 29 (that is, the outer circumferential surface side of the tire). The tread 30 is provided with a tread pattern (not shown) in which a plurality of grooves are formed on a contact surface with the road surface, as in the conventional rubber pneumatic tire.

Next, the method of producing a tire according to the embodiment will be described. (Tire Case Molding Step)

First, tire case half bodies supported by a thin metal support ring face each other. Next, a bonding mold is installed to be in contact with an outer circumferential surface of an abutting part of the tire case half body. The bonding mold is configured to press the circumference of the bonded part (that is, the abutting part) of the tire case half body with a predetermined pressure. Next, by pressing the circumference of the bonded part of the tire case half body at a temperature equal to or higher than a melting point of the resin material forming the tire case, the bonded part is melted, and the tire case half bodies are fused and integrated, such that the tire case 17 is formed.

In this embodiment, the bonded part between the tire case half bodies is heated using the bonding mold, but the invention is not limited thereto. For example, the bonded part may be heated by a separately provided high frequency heater or the like; or the bonded part may be softened or melted in advance by hot air, irradiation with infrared rays, or the like, and pressed with a bonding mold, thereby bonding between the tire case half bodies.

(Resin Layer Forming Step)

Next, the resin layer 15 is formed on the inner circumferential surface of the tire case 17 thus formed. The formation of the resin layer 15 is performed, for example, using the coating liquid for forming a resin layer described above. Specifically, the coating liquid for forming a resin layer is applied to a position, at which the resin layer 15 is provided, in the inner circumferential surface of the tire case 17 to form a coating film, and at least a part of a solvent contained in the coating film is removed by drying, and then heating is performed if necessary to cure the coating film to form the resin layer 15.

In the embodiment, the resin layer 15 is provided after the formation of the tire case 17, but the embodiment is not limited thereto, and the resin layer 15 is formed on the tire case half bodies and then the tire case half bodies may be bonded to each other to form the tire case 17 on which the resin layer 15 is provided. The resin layer 15 may be formed after a reinforcing cord member winding step described later, may be formed after a laminating step, or may be formed after a vulcanization step. The formation of the coating film by the application of the coating liquid for forming a resin layer and the drying of the coating film are performed prior to the vulcanization step, and the coating film of the coating liquid for forming a resin layer is cured by heating in the vulcanization step to form the resin layer 15.

(Reinforcing Cord Member Winding Step)

Next, the reinforcing cord 26 is wound around the tire case 17. The winding of the reinforcing cord 26 is performed using, for example, a cord feeding device equipped with a cord heating device (not shown).

Specifically, for example, the reinforcing cord 26 is heated by the cord heating device, and spirally wound around the outer circumferential surface of the crown portion 16 of the rotating tire case 17 with a fixed tension in a state in which the resin material 27 for coating of the reinforcing cord 26 is melted or softened. At this time, the lower surface 26D of the reinforcing cord 26 is in contact with the outer circumferential surface of the crown portion 16. The resin material 27 for coating in a state of being melted or softened by heating spreads on the outer circumferential surface of the crown portion 16, and the reinforcing cord 26 is welded to the outer circumferential surface of the crown portion 16. Thereby, the bonding strength between the crown portion 16 and the reinforcing cord 26 is increased.

In the embodiment, the reinforcing cord 26 is bonded to the outer circumferential surface of the crown portion 16 as described above, but the reinforcing cord 26 may be bonded by another method. For example, the bonding may be performed so that a part or the whole of the reinforcing cord 26 is embedded in the crown portion 16.

(Roughening Treatment Step)

Next, a blasting device (not shown) injects a projection material to the outer circumferential surface 17S of the reinforcing cord layer 28 at a high speed while rotating the tire case 17 side . The injected projection material collides with the outer circumferential surface 17S to form the finely roughened irregularity 96 having an arithmetic average roughness Ra of 0.05 mm or more on the outer circumferential surface 17S. By forming the finely roughened irregularity 96 on the outer circumferential surface 17S of the reinforcing cord layer 28, the outer circumferential surface 17S becomes hydrophilic, and the wettability of the bonding agent described later is improved.

(Laminating Step)

Next, a bonding agent for bonding the cushion rubber 29 is applied to the outer circumferential surface 17S of the roughened reinforcing cord layer 28. The bonding agent is not particularly limited, examples of the bonding agent include a triazine thiol-based adhesive, a chlorinated rubber-based adhesive, a phenol-based resin adhesive, an isocyanate-based adhesive, a halogenated-based rubber adhesive, and a rubber-based adhesive, and a bonding agent reacting at a temperature (from 90°C to 140°C) at which the cushion rubber 29 can be vulcanized is preferably used.

Next, the cushion rubber 29 in an unvulcanized state is wound on the circumferential surface 17S, to which the bonding agent is applied, by one round and the bonding agent such as a rubber cement composition is applied on the cushion rubber 29. Next, the vulcanized or semi-vulcanized tread rubber 30A is wound on the cushion rubber 29, to which the bonding agent is applied, by one round, whereby a raw tire case is formed.

(Vulcanization Step)

Next, the raw tire case is accommodated in a vulcanizer or a mold and vulcanized. At this time, the unvulcanized cushion rubber 29 flows into the roughened irregularity 96 formed on the outer circumferential surface 17S of the reinforcing cord layer 28 by the roughening treatment. When the vulcanization is completed, the cushion rubber 29 flowing into the roughened irregularity 96 exerts an anchor effect, and the bonding strength between the cushion rubber 29 and the tire case 17 and/or the reinforcing cord 26 is improved. That is, the bonding strength between the tread 30 and the tire case 17 and/or the reinforcing cord 26 is improved through the cushion rubber 29.

If the above-described seal layer 24 is bonded to the bead portion 12 of the tire case 17 using an adhesives or the like, the tire 10 is completed.

After the tire 10 is completed, annealing treatment for heating the tire 10 may be performed.

The tire 10 is a so-called tubeless tire in which an air chamber is formed between the tire 10 and the rim 20 by mounting the bead portion 12 on the rim 20, but the invention is not limited to this configuration and the tire may have a perfect tube shape.

Hereinabove, although the forms for carrying out the invention have been described above by way of the embodiments, these embodiments are merely examples, and various modifications can be made without departing from the scope of the invention. Further, it goes without saying that the scope of rights of the invention is not limited to these embodiments, but by the appended claims.

EXAMPLES

The invention is specifically described below by way of examples thereof; however, the invention is not restricted

thereto by any means.

[Example A]

(Example A1)

-Production of Tire-

As a resin material which forms a tire frame, a resin material having compositions (Composition of resin material for frame) shown in Table 2 was used. The resin material was pelletized and injection-molded using U-MHI PLATECH CO., LTD. "1300emII" as an injection molding machine under the conditions that a molding temperature is 260°C and a mold temperature is 60°C to obtain a tire case half body. A tire frame (tire case 17) was produced by the production method shown in the above-described embodiment using the obtained tire case half body. A thickness of the tire frame was 1.5 mm.

By using a dispersion liquid having the compositions (Composition of coating liquid for forming resin layer) shown in Table 2 as a coating liquid for forming a resin layer used for forming the resin layer, a resin layer (resin layer 15) was formed on the entire inner circumferential surface of the tire frame by the production method shown in the above-described embodiment. A film thickness of the formed resin layer is shown in Table 2.

The coating liquid for forming a resin layer was blended by the composition shown in Table 2, and was obtained by stirring for 10 minutes at room temperature (25°C) with a mechanical stirrer. A drying temperature for drying a coating film of the coating liquid for forming a resin layer was room temperature (25°C), and a drying time was 120 minutes. The coating film was cured using a hot air oven at 150°C with a heating temperature of 150°C and a heating time of 20 minutes.

By bonding the seal layer through the reinforcing cord member winding step, the roughening treatment step, the laminating step, and the vulcanization step shown in the above-described embodiment using the tire frame on which the resin layer was formed, a tire of tire size 225/45R17 was produced.

As a metal member (metal member 26A) of the reinforcing cord member, a multifilament (stranded wire made by stranding seven monofilament (made of steel, strength: 280 N, elongation: 3%) having φ0.35 mm) having an average diameter of φ1.15 mm was used. As the reinforcing cord member, a member obtained by coating the metal member with a resin material (resin material 27 for coating) having the same composition as the resin material forming the tire frame was used.

In the vulcanization step, the vulcanization temperature was 150°C, and the vulcanization time was 20 minutes.

-Production of Test Piece-

As the resin material that forms the tire frame, the resin material having the compositions shown in Table 2 was used. The resin material was pelletized and heated for 10 minutes under the conditions of 260°C and 10 MPa using an electric heat press (manufactured by Kodaira Seisakusho Co., Ltd.) to perform heat pressing to produce a resin plate having a length of 150 mm, a width of 50 mm, and a thickness of 2 mm. From the obtained resin plate, a dumbbell-shaped test piece (No. 5 test piece) defined in JIS K 6251 (1993) was punched out to produce a tire frame test piece for evaluation.

The dispersion liquid having the compositions shown in Table 2 was used as the coating liquid for forming a resin layer used for forming the resin layer. The coating liquid for forming a resin layer was applied to the surface of the tire frame test piece, dried at room temperature (25°C) for 120 minutes, and heated for 20 minutes using the hot air oven at 150°C to obtain the tire frame test piece in which the resin layer having the film thickness shown in Table 2 was formed.

When a gel fraction of a urethane resin contained in the formed resin layer was measured by the above-described method, a swelling ratio was 4.0 mass times.

-Measurement of Tensile Modulus of Elasticity-

Using the tire frame test piece on which the resin layer was formed, the tensile modulus of elasticity of the tire frame and the resin layer, respectively, was measured using a tensile tester (RTF-1210, manufactured by A & D Company, Limited) at room temperature (25°C) and at a tensile speed of 100 mm/min based on the initial inclination. The value of the tensile modulus of elasticity of the resin layer ("Modulus of elasticity (MPa)" in Table 2) and the ratio of the tensile modulus of elasticity of the resin layer with respect to that of the tire frame ("Elastic modulus ratio (%)" in Table 2) are shown in Table 2. The numerical value of "Elastic modulus ratio (%)" shown in Table 2 is a value of "tensile modulus of elasticity of resin layer ÷ tensile modulus of elasticity of tire frame × 100".

-Measurement of UV Transmittance-

Using the tire frame test piece on which the resin layer was formed, an UV transmittance of the ultraviolet light (280 nm and 350 nm) of the resin layer was measured using an ultraviolet/visible/near infrared spectrophotometer (SolidSpec-3700DUV, manufactured by Shimadzu Corporation). The transmittance ("Transmittance 350 nm (%)" in Table 2) at an ultraviolet light of 350 nm and the transmittance ("Transmittance 280 nm (%)" in Table 2) at an ultraviolet light of 280 nm are shown in Table 2. In addition, when the transmittance at an ultraviolet light of 280 nm was 1% or less, and the transmittance at an ultraviolet light of 350 nm was 2% or less, it was determined that light shielding property was high.

-Measurement of Softening Point-

The dispersion liquid having the compositions shown in Table 2 was used as the coating liquid for forming a resin layer used for forming the resin layer. The coating liquid for forming a resin layer was applied on a glass Petri dish, dried at room temperature (25°C) for 120 minutes, and heated for 20 minutes using the hot air oven at 150°C to obtain the resin film test piece having the film thickness shown in Table 2.
The obtained resin film test piece was measured using a dynamic viscoelasticity tester (RSA-G2, manufactured by TA Instruments) under the conditions that temperature is from 0°C to 180°C, a temperature rising rate is 4°C/min, a strain is 1%, and a measurement frequency is 35 Hz. A temperature at a minimum peak position of a primary derivative of an elastic loss (E') was taken as the softening point (°C).

-Evaluation of Adhesion-

The evaluation of the adhesion of the resin layer to the tire frame was performed from a crosshatch (cross-cut) test based on JISK 5600 (ISO 2409) using the tire frame test piece on which the resin layer was formed.
As a specific test method, first, 11 cut lines (1) are inserted into the resin layer of the test piece using a cross hatch cutter (Model 295 (manufactured by ERICHSEN GmbH & Co. KG)) at intervals of 1 mm. 11 cut lines (2) are inserted into the cut line (1) at a right angle to create 100 squares of 1 mm grid. A cellophane tape is pasted on 100 squares and forcibly peeled off, and then the degree of peeling of the resin layer is checked using a loupe.
Based on Japan Paint Inspection Association evaluation criteria, as shown in Table 1 below, a score evaluation out of 10 points was performed. The results are shown in Table 2. If the score was eight points or more, it was determined that the evaluation has passed.

[Table 1]

| Evaluation Score | State of cut |
|---|---|
| 10 points | Each cut is thin and both sides thereof are smooth, and there is no peeling at intersection of cuts and each cell of square grid |
| 8 points | Slight peeling exists at intersection of cuts, no peeling is at each cell of square grid, and area of defective parts is equal to or less than 5% of area of entire square grid |
| 6 points | Peeling is at both sides and intersection of cuts, and area of defective parts is from 5 to 15% of area of entire square grid |
| 4 points | Peeled-off width of cut is large and area of defective parts is 15 to 35% of area of entire square grid |
| 2 points | Peeled-off width of cut is larger than that of 4 points and area of defective parts is 35 to 65% of area of entire square grid |
| 0 points | Area of defective parts of cut is equal to or larger than 65% of area of entire square grid |

-Light Resistance Test-

Using the tire frame test piece on which the resin layer was formed, light was emitted to the surface on the resin layer side using a xenon light fastness tester (Ci 4000, manufactured by Atlas Material Testing Technology). The light irradiation conditions were that an irradiation light quantity was 60 $W/cm^2$ (wavelength of from 300 nm to 400 nm), a black panel temperature was 65°C, humidity was 50% RH, no rainfall condition was present, and an irradiation time was 1000 hours.

For both the test piece before the light irradiation and the test piece after the light irradiation, a thickness of 0.3 mm was cut out from the surface of the resin layer side (light irradiation side) in the tire frame test piece, and a weight average molecular weight was measured.
The measurement of the weight average molecular weight was performed using gel permeation chromatography (GPC, model number: HLC-8320GPC, manufactured by Tosoh Corporation). The weight average molecular weight was obtained using an RI detector under the measurement conditions that column: TSK-GEL Super HM-M (manufactured by Tosoh Corporation), developing solvent: 1,1,1,3,3,3-hexafluoro-2-propanol (manufactured by Wako Pure Chemical Industries, Ltd.), column temperature: 40°C, and flow rate: 0.3 ml/min.
When the weight average molecular weight in the test piece before the light irradiation was set to 100, the conversion value of the weight average molecular weight in the test piece after the light irradiation was obtained to evaluate the light resistance. The values of the obtained conversion value are shown in Table 2 ("Light resistance" in Table 2). If the conversion value was 80 or more, it was determined that there was light resistance.

-Crack Progression Test-

A hole having a diameter of 0.3 mm was provided at the center of the tire frame test piece on which the resin layer was formed, and a fatigue test was repeatedly performed using an electromagnetic servo fatigue tester (EMT-1 kNV, manufactured by Shimadzu Corporation) under the conditions that a strain was 11%, a frequency was 17 Hz, and a temperature was 40°C. The number of times up to rupture is taken as the number of times of cracking resistance, and the results are shown in Table 2 ("the Number of times (times) of cracking resistance " in Table 2).

-Tire Traveling Durability Test-

The obtained tire (tire size: 225/45R17) was assembled to a 7.5 JJ × 17 rim conforming to JATMA, and adjusted to an internal pressure of 3.0 kg/cm$^2$ in a room of 25 ± 2°C. Thereafter, a load of 540 kg was loaded on the tire, and the tire was traveled 3000 km at a speed of 60 km/hour on a drum having a diameter of 3 m (hereinafter also referred to as "condition 1").
Another tire (tire size: 225/45R17) was assembled to a 7.5 JJ × 17 rim conforming to JATMA, and adjusted to an internal pressure of 3.0 kg/cm$^2$ in a room of 25 ± 2°C. Thereafter, a load of 540 kg was loaded on the tire, and traveled 2500km at a speed of 60 km/hour on a drum having a diameter of 3 m (hereinafter also referred to as "condition 2").
After the tire traveling durability test was performed under the condition 1 and the condition 2, the presence or absence of flaws such as cracks on the inner circumferential surface of the tire frame was confirmed and evaluated according to the following criteria.

"A": Traveling was completed and flaws were not observed under both the condition 1 and the condition 2.
"B": Although traveling was not completed or traveling was completed and flaws were observed under the condition 1, traveling was completed under the condition 2 and flaws were not observed.
"C": Traveling was not completed or completed and flaws were observed under both the condition 1 and the condition 2.

The "traveling was not completed" means those in which peeling of a member, air leakage, swelling of a tire, and the like occurred and traveling was not made before the end of the tire traveling durability test.
If the evaluation result is "A" or "B", it can be said that the tested tire is suitable for use as a tire. The results are shown in Table 2.

-Traveling Durability Test after Tire UV Exposure-

Another tire (tire size: 225/45R17) obtained was exposed for 12 hours under a metal halide lamp, and then was assembled to a 7.5 JJ × 17 rim conforming to JATMA and adjusted to an internal pressure of 3.0 kg/cm$^2$ in a room of 25 ± 2°C. Thereafter, a load of 540 kg was loaded on the tire, and the tire was traveled 3000 km at a speed of 60 km/hour on a drum having a diameter of 3 m (traveling durability test after UV exposure).
After the tire was subjected to the traveling durability test after UV exposure, the presence or absence of flaws such as cracks on the inner circumferential surface of the tire frame was confirmed and evaluated according to the following criteria.

"A": Traveling was completed and flaws were not observed.
"B": Although traveling was completed and slight flaws were observed, the observed flaws were in a tolerance range.
"C": Traveling was not completed, or although traveling was completed, flaws exceeding the tolerance range were

observed.

The "traveling was not completed" means those in which peeling of a member, air leakage, swelling of a tire, and the like occurred and traveling was not made before the end of the tire traveling durability test.

If the evaluation result is "A" or "B", it can be said that the tested tire is suitable for use as a tire. The results are shown in Table 2.

(Examples A2 to A19, Comparative Examples A1 to A5)

Except that the composition (Composition of resin material for frame) of the resin material for forming the tire frame and the composition (Composition of coating liquid for forming resin layer) of the coating liquid for forming the resin layer were changed as shown in Tables 2 to 4, in the same manner as in Example A1, a tire was produced and a test piece was produced. In the same manner as in Example A1, the measurement of the film thickness, the measurement of the tensile modulus of elasticity, the measurement of the ultraviolet transmittance, the measurement of the softening point, the evaluation of the adhesion, the light resistance test, the crack progression test, and the tire traveling durability test were performed. The measurement and evaluation results are shown in Tables 2 to 4.

In Comparative Example A1, in the production of the tire and the production of the test piece, the step of providing the resin layer was omitted. For Comparative Example A1, the measurement of the film thickness, the measurement of tensile modulus of elasticity, the measurement of the ultraviolet transmittance, the measurement of the softening point, and the evaluation of the adhesion were omitted, and in the light resistance test, the step of removing the resin layer was omitted.

The swelling ratio of the urethane resin contained in the resin layer formed in Example A2, Example A3, Example A4, Example A6, Example A7, Example A11, Example A16, Comparative Example A3, Comparative Example A4, and Comparative Example A5 was measured by the method described above.

In Example A2, the swelling ratio was 4.0 mass times, in Example A3, the swelling ratio was 5.0 mass times, in Example A4, the swelling ratio was 5.0 mass times, in Example A6, the swelling ratio was 3.0 mass times, in Example A7, the swelling ratio was 4.0 mass times, in Example A11, the swelling ratio was 4.0 mass times, in Example A16, the swelling ratio was 5.0 mass times, in Comparative Example A3, the swelling ratio was 3.0 mass times, and in Comparative Example A4, the swelling ratio was 17 mass times. In Comparative Example A5, the urethane resin was dissolved in the tetrahydrofuran and thus was not able to be evaluated.

[Table 2]

| | | Example A1 | Example A2 | Example A3 | Example A4 | Example A5 | Example A6 | Example A7 | Comparative Example A1 | Comparative Example A2 | Comparative Example A3 |
|---|---|---|---|---|---|---|---|---|---|---|---|
| Composition of resin material for frame (parts by mass) | TPA1 | 100 | 100 | 100 | 100 | 100 | 100 | 100 | 100 | 100 | 100 |
| | TPA2 | - | - | - | - | - | - | - | - | - | - |
| | TPEE | - | - | - | - | - | - | - | - | - | - |
| Composition of coating liquid for forming resin layer (parts by mass) | PU1 | 100 | 100 | 100 | 100 | 100 | 100 | 100 | - | - | 100 |
| | PU2 | - | - | - | - | - | - | - | - | 100 | - |
| | PU3 | - | - | - | - | - | - | - | - | - | - |
| | Crosslinking agent | 5 | 5 | 3 | 17.5 | 5 | 20 | 7 | - | - | 50 |
| | CBPU | 20 | 50 | 50 | 120 | 20 | 100 | 50 | - | - | 120 |
| | UVA | - | - | - | - | - | - | - | - | 10 | - |
| | HALS | - | - | - | - | - | - | - | - | - | - |
| Characteristic of resin layer | Film thickness μm) | - | - | - | - | - | - | - | - | - | - |
| | Modulus of elasticity (MPa) | 7.8 | 8.1 | 9.7 | 23.8 | 7.8 | 24 | 10.7 | - | 1.1 | 70 |
| | Elastic modulus ratio (%) | 2.2 | 2.3 | 2. 8 | 6.8 | 2.2 | 6.9 | 3.1 | - | 0.3 | 20 |
| | Transmittance 350 nm (%) | 0.85 | 0.12 | 0.11 | 0.00 | 20.69 | 0.00 | 0.12 | - | 0.00 | 0.00 |
| | Transmittance 280 nm(%) | 0.55 | 0.40 | 0.40 | 0.25 | 17.49 | 0.28 | 0.40 | - | 0.55 | 0.20 |
| | Softening point (°C) | 120 | 162 | 162 | 165 | 162 | 162 | 162 | - | 30 | 166 |

(continued)

| | | Example A1 | Example A2 | Example A3 | Example A4 | Example A5 | Example A6 | Example A7 | Comparative Example A1 | Comparative Example A2 | Comparative Example A3 |
|---|---|---|---|---|---|---|---|---|---|---|---|
| Evaluation | Adhesion | 8 | 8 | 8 | 8 | 8 | 8 | 8 | - | 8 | 6 |
| | Light resistance | 90 | 100 | 100 | 100 | 40 | 100 | 100 | 20 | 40 | 99 |
| | Number of times (times) of cracking resistance | 150 | - | - | - | - | - | - | 80 | 80 | - |
| | Traveling durability | A | - | - | - | - | - | - | C | - | - |
| | Traveling durability after UV exposure | A | - | - | - | - | - | - | C | - | - |

[Table 3]

| | | Example A8 | Example A9 | Example A10 | Example A11 | Example A12 | Example A13 | Example A14 | Example A15 | Example A16 |
|---|---|---|---|---|---|---|---|---|---|---|
| Composition of resin material for frame (parts by mass) | TPA1 | 75 | 75 | 75 | 75 | 75 | 75 | 75 | 75 | - |
| | TPA2 | 25 | 25 | 25 | 25 | 25 | 25 | 25 | 25 | - |
| | TPEE | - | - | - | - | - | - | - | - | 100 |
| Composition of coating liquid for forming resin layer (parts by mass) | PU1 | 100 | 100 | 100 | - | - | - | - | - | - |
| | PU2 | - | - | - | - | - | - | - | - | 100 |
| | PU3 | - | - | - | 100 | 100 | 100 | 100 | 100 | - |
| | Crosslinking agent | 5 | 3 | 7 | 5 | 5 | 5 | 5 | 5 | 5 |
| | CBPU | 50 | 50 | 50 | - | - | - | - | - | 50 |
| | UVA | - | - | - | 5 | 5 | 5 | 5 | 2.5 | - |
| | HALS | - | - | - | - | 1 | 2.5 | 4 | - | - |
| Characteristic of resin layer | Film thickness (μm) | - | - | - | - | - | - | - | - | - |
| | Modulus of elasticity (MPa) | 8.1 | 9.7 | 10.7 | 5.7 | 6.8 | 5.6 | 4. 9 | 31.6 | 7.8 |
| | Elastic modulus ratio (%) | 2.7 | 3.2 | 3.6 | 1.9 | 1.6 | 1.9 | 1.6 | 10.5 | 3.9 |
| | Transmittance 350 nm (%) | 0.13 | 0.12 | 0.12 | 0.02 | 0.03 | 0.05 | 0.05 | 1.04 | 0.12 |
| | Transmittance 280 nm(%) | 0.40 | 0.40 | 0.40 | 0.55 | 0.45 | 0.42 | 0.60 | 0.37 | 0.40 |
| | Softening point (°C) | 162 | 162 | 162 | - | - | - | - | - | - |

(continued)

| | | Example A8 | Example A9 | Example A10 | Example A11 | Example A12 | Example A13 | Example A14 | Example A15 | Example A16 |
|---|---|---|---|---|---|---|---|---|---|---|
| Evaluation | Adhesion | 8 | 8 | 8 | 8 | 8 | 8 | 8 | 8 | 8 |
| | Light resistance | 100 | 100 | 100 | 98 | 97 | 101 | 99 | 89 | 100 |
| | Number of times (times) of cracking resistance | 180 | - | - | - | - | - | - | - | - |
| | Traveling durability | A | - | - | - | - | - | - | - | - |
| | Traveling durability after UV exposure | A | - | - | - | - | - | - | - | - |

[Table 4]

| | | Example A17 | Example A18 | Example A19 | Comparative Example A4 | Comparative Example A5 |
|---|---|---|---|---|---|---|
| Composition of resin material for frame (parts by mass) | TPA1 | 75 | 75 | 75 | 100 | 75 |
| | TPA2 | 25 | 25 | 25 | - | 25 |
| | TPEE | - | - | - | - | |
| Composition of coating liquid for forming resin layer (parts by mass) | PU1 | - | - | - | 100 | - |
| | PU2 | - | - | - | - | 100 |
| | PU3 | 100 | 100 | 100 | - | - |
| | Crosslinking agent | 5 | 5 | 5 | - | - |
| | CBPU | - | - | - | - | - |
| | UVA | 10 | - | 1 | - | 10 |
| | HALS | - | - | - | - | - |
| Characteristic of resin layer | Film thickness μm) | - | - | - | - | - |
| | Modulus of elasticity (MPa) | 7.3 | 5.1 | 5.3 | 8.6 | 1.1 |
| | Elastic modulus ratio (%) | 2.4 | 1.7 | 1.8 | 2.5 | 0.6 |
| | Transmittance 350 nm (%) | 0.00 | 99.74 | 19.51 | 99.65 | 0 |
| | Transmittance 280 nm(%) | 0.53 | 95.48 | 5.79 | 95.00 | 0.55 |
| | Softening point (°C) | 100 | 100 | - | 46 | 30 |
| Evaluation | Adhesion | 8 | 8 | 8 | 8 | 8 |
| | Light resistance | 102 | 20 | 40 | 20 | 100 |
| | NumberofLimes (Limes) of cracking resistance | - | - | - | 95 | - |
| | Traveling durability | - | - | - | C | - |
| | Traveling durability after UV exposure | - | - | - | C | - |

The meanings of the notations in Tables 2 to 4 are as follows.

- TPA1: Polyamide-based thermoplastic elastomer (manufactured by Ube Industries, Ltd., product name: XPA9055X1)
- TPA2: Polyamide-based thermoplastic elastomer (manufactured by Ube Industries, Ltd., product name: XPA9048X1)
- TPEE3: Polyester-based thermoplastic elastomer (manufactured by Du Pont-Toray Co., Ltd., product name: Hytrel 5557)

- PU1: Urethane resin water dispersion liquid (non-volatile content concentration: 38% by mass, manufactured by DKS Co. Ltd., product name: Superflex 460)
- PU2: Urethane resin water dispersion liquid (non-volatile content concentration: 38% by mass, manufactured by DKS Co. Ltd., product name: Superflex 470)
- PU3: Urethane resin water dispersion liquid (non-volatile content concentration: from 32.5 to 36.5% by mass, manufactured by Dainichiseika Color & Chemicals Mfg. Co., Ltd., product name: Resamine D4080)
- Crosslinking agent: Crosslinking agent (nonvolatile content concentration: 40% by mass, manufactured by Dainichiseika Color & Chemicals Mfg. Co., Ltd., product name: Resamine D-52)
- CBPU: Carbon black-containing urethane resin water dispersion liquid (nonvolatile content concentration: 22% by mass, carbon black content in nonvolatile content: 10% by mass, urethane resin content in nonvolatile content: 12% by mass, manufactured by Dainichiseika Color & Chemicals Mfg. Co., Ltd., product name: Seika Seven DW-1790 black (A))
- UVA: Triazine-based UV absorber (manufactured by BASF, product name: Tinuvin 400)
- HALS: Hindered amine-based radical scavenger (manufactured by BASF, product name: Tinuvin 123)

The urethane resin contained in the PU1 (Superflex 460) contains 1,6-hexamethylene diisocyanate as the polyisocyanate component in the monomer units, and contains polyhexamethylene glycol as the polyol component.
The urethane resin contained in the PU2 (Superflex 470) contains 1,6-hexamethylene diisocyanate as the polyisocyanate component in the monomer units, and contains polyhexamethylene glycol as the polyol component.
The urethane resin contained in the PU3 (Resamine D4080) contains ether carbonate-based polyol in the monomer units.
The urethane resin contained in the CBPU (Seika Seven DW 1790 black (A)) contains isophorone diisocyanate as the polyisocyanate component in the monomer units, and contains polyhexamethylene glycol and polyhexamethylene carbonate diol as the polyol component.
In Tables 2 to 4, "-" in the composition means that the component is not contained, and the numerical value in the composition indicates the addition amount (parts by mass).
In Tables 2 to 4, "-" in the resin layer properties and the adhesion indicates that the measurement and evaluation were omitted because the resin layer was not present.
In Tables 2 to 4, "-" in the traveling durability and the traveling durability after the UV exposure means that a tire which can withstand the evaluation was not able to be obtained and therefore the evaluation was not able to be made.

[Example B]

(Example B1)

Except that the composition (Composition of resin material for frame) of the resin material forming the tire frame and the composition (Composition of coating liquid for forming resin layer) of the coating liquid for forming the resin layer were changed as shown in Table 5, in the same manner as in Example A1, the production of the tire, the production of the test piece, the measurement of the film thickness, the measurement of the tensile modulus of elasticity, the measurement of the softening point, and the tire traveling durability test were performed. The measurement and evaluation results are shown in Table 5.

-Measurement of Surface Resistance Value-

The surface resistance value on the surface of the resin layer was measured using the tire frame test piece on which the resin layer was formed. Specifically, using a high resistivity meter (High Tester UP MCP-HT450, manufactured by Mitsubishi Chemical Corporation) and a URS probe, the surface resistance value after 30 seconds with an applied voltage of 100 V was measured according to JIS K 6911: (1995). The results are shown in Table 5. When the surface resistance value was $1.0 \times 10^{10}$ Ω/sq or less, it was determined to be a low resistance value.

(Example B2 to Example B4, Comparative Example B1, Example B5)

Except that the composition (Composition of resin material for frame) of the resin material forming the tire frame and the composition (Composition of coating liquid for forming resin layer) of the coating liquid for forming the resin layer were changed as shown in Table 5, in the same manner as in Example B1, the tire was produced and the test piece was produced. In the same manner as in Example B1, the measurement of the film thickness, the measurement of the tensile modulus of elasticity, the measurement of the softening point, the measurement of the surface resistance value, and the tire traveling durability test were performed. The measurement and evaluation results are shown in Table 5.

In Comparative Example B1, in the production of the tire and the production of the test piece, the step of providing the resin layer was omitted. In Comparative Example B 1, the measurement of the film thickness, the measurement of the tensile modulus of elasticity, and the measurement of the softening point were omitted, and for the measurement of the surface resistance value, the surface resistance value on the surface of the tire frame was measured.

[Table 5]

| | | Example B1 | Example B2 | Example B3 | Example B4 | Comparative Example B1 | Example B5 |
|---|---|---|---|---|---|---|---|
| Composition of resin material for frame (parts by mass) | TPA1 | 75 | 75 | 75 | 75 | 75 | 75 |
| | TPA2 | 25 | 25 | 25 | 25 | 25 | 25 |
| Composition of coating liquid for forming resin layer (parts by mass) | PU1 | - | - | - | - | - | 100 |
| | PU3 | 100 | 100 | 100 | 100 | - | - |
| | Crosslinking agent | 5 | 5 | 5 | 5 | - | 5 |
| | PVA | 40 | - | - | - | - | - |
| | Granulated sugar | - | 40 | - | - | - | - |
| | PEG200 | - | - | 50 | - | | |
| | PEG400 | - | - | - | 55 | - | - |
| Characteristic of resin layer | Film thickness μm) | - | - | - | - | - | - |
| | Modulus of elasticity (MPa) | 25 | 22 | 9.0 | 7.8 | - | 7.8 |
| | Elastic modulus ratio (%) | 8.3 | 7.3 | 3.0 | 2.6 | - | 2.6 |
| | Softening point (°C) | - | - | - | - | - | - |
| Evaluation | Surface resistance value (Ω/sq) | $9.80 \times 10^9$ | $9.07 \times 10^9$ | $1.52 \times 10^7$ | $6.86 \times 10^7$ | $3.01 \times 10^{10}$ | $7.49 \times 10^{10}$ |
| | Traveling durability | - | - | - | - | C | - |

The meanings of the notations in Table 5 are as follows.

- TPA1: Polyamide-based thermoplastic elastomer (manufactured by Ube Industries, Ltd., product name: XPA9055X1)
- TPA2: Polyamide-based thermoplastic elastomer (manufactured by Ube Industries, Ltd., product name: XPA9048X1)
- PU1: Urethane resin water dispersion liquid (non-volatile content concentration: 38% by mass, manufactured by DKS Co. Ltd., product name: Superflex 460)
- PU3: Urethane resin water dispersion liquid (nonvolatile content concentration: from 32.5 to 36.5% by mass, manufactured by Dainichiseika Color & Chemicals Mfg. Co., Ltd., product name: Resamine D4080)
- Crosslinking agent: Crosslinking agent (nonvolatile content concentration: 40% by mass, manufactured by Dainichiseika Color & Chemicals Mfg. Co., Ltd., product name: Resamine D-52)

- PVA: Polyvinyl alcohol (weight average molecular weight: 2000)
- PEG 200: Polyethylene glycol (number average molecular weight: 200, manufactured by Tokyo Chemical Industry Co., Ltd.)
- PEG 400: Polyethylene glycol (number average molecular weight: 400, manufactured by Tokyo Chemical Industry Co., Ltd.)

The urethane resin contained in the PU1 (Superflex 460) contains 1,6-hexamethylene diisocyanate as the polyisocyanate component in the monomer units, and contains polyhexamethylene glycol as the polyol component.
The urethane resin contained in the PU3 (Resamine D4080) contains ether carbonate-based polyol in the monomer units.
In Tables 5, "-" in the composition means that the component is not contained, and the numerical value in the composition indicates the addition amount (parts by mass).
In Tables 5, "-" in the resin layer properties indicates that the measurement was omitted because the resin layer was not present.
It is understood from Tables 2 to 5 that in the example, the occurrence of the cracks on the inner circumferential surface of the tire frame is suppressed as compared with the comparative example.

## Claims

**1.** A tire (10), comprising:

a tire frame having an annular shape and comprising a resin; and
a resin layer (15) that is provided on at least a part of an inner circumferential surface of the tire frame and that contains a urethane resin, **characterized in that** the resin layer (15) has a tensile modulus of elasticity of from 2 MPa to 50 MPa, the tensile modulus of elasticity of the resin layer (15) being from 0.01 times to 0.50 times a tensile modulus of elasticity of the tire frame, and the resin layer (15) having a softening point of 80°C or higher, wherein the tensile modulus of elasticity of the resin layer (15) and the tensile modulus of elasticity of the tire frame are respectively measured by using a tire frame test piece and a tensile tester at room temperature (25°C) and at a tensile speed of 100 mm/min based on an initial inclination;
the tire frame test piece is made of the same composition as the tire frame, has a dumbbell-shaped test piece (No. 5 test piece) as defined in JIS K 6251 (1993), and the resin layer (15) is formed thereon;
and
the softening point of the resin layer (15) is a temperature at a minimum peak position of a primary derivative of an elastic loss (E') measured using a dynamic viscoelasticity tester under the conditions that temperature is from 0°C to 180°C, a temperature rising rate is 4°C/min, a strain is 1%, and a measurement frequency is 35 Hz.

**2.** The tire (10) according to claim 1, wherein the resin layer (15) has a thickness of from 1 μm to 1000 μm.

**3.** The tire (10) according to claim 1 or 2, wherein the urethane resin has a three-dimensional network structure.

**4.** The tire (10) according to any one of claims 1 to 3, wherein the urethane resin contains, as a monomer unit, polyisocyanate and at least one selected from the group consisting of a polyether polyol and a polycarbonate polyol.

**5.** The tire (10) according to any one of claims 1 to 4, wherein the resin layer (15) further contains at least one selected from the group consisting of a triazine-based ultraviolet absorber, a hindered amine-based radical scavenger, an amine-based anti-aging agent and carbon black.

**6.** The tire (10) according to any one of claims 1 to 5, wherein the resin layer (15) has a surface resistance value of from $1.0 \times 10^4$ Ω/sq to $2.0 \times 10^{10}$ Ω/sq.

**7.** The tire (10) according to any one of claims 1 to 6, wherein the resin layer (15) further includes at least one selected from the group consisting of glycerin, a polyvinyl alcohol, a polyethylene glycol, a polypropylene glycol, an alkyl sulfate, a sucrose fatty acid ester, and a glycerin fatty acid ester.

**8.** The tire (10) according to any one of claims 1 to 7, wherein the resin layer (15) has a softening point of 120°C or higher.

**9.** The tire (10) according to any one of claims 1 to 7, wherein the resin layer (15) has a softening point of 140°C or higher.

**10.** The tire (10) according to any one of claims 1 to 9, wherein the resin layer (15) has a thickness of from 10 μm to 150 μm.

**11.** The tire (10) according to any one of claims 1 to 10, wherein the resin layer (15) has a tensile modulus of elasticity of from 3 MPa to 40 MPa.

**12.** The tire (10) according to any one of claims 1 to 11, wherein a content of the urethane resin is 60% by mass or greater with respect to a total mass of the resin layer (15).

**13.** The tire (10) according to any one of claims 1 to 12, wherein the resin layer (15) contains carbon black, and a content of carbon black with respect to a total mass of the resin layer (15) is from 0.1% by mass to 20% by mass.

**14.** The tire (10) according to any one of claims 1 to 13, wherein the resin layer (15) contains a triazine-based ultraviolet absorber, and a content of the triazine-based ultraviolet absorber with respect to a total mass of the resin layer (15) is from 2% by mass to 20% by mass.

**15.** The tire (10) according to any one of claims 1 to 14, wherein the resin layer (15) contains a hindered amine-based radical scavenger, and a content of the hindered amine-based radical scavenger with respect to a total mass of the resin layer (15) is from 0.1% by mass to 10% by mass.

**Patentansprüche**

**1.** Reifen (10), umfassend:

einen Reifenrahmen, der eine ringförmige Gestalt aufweist und ein Harz umfasst; und

eine Harzschicht (15), die auf mindestens einem Teil einer inneren Umfangsoberfläche des Reifenrahmens bereitgestellt ist und die ein Urethanharz enthält, **dadurch gekennzeichnet, dass** die Harzschicht (15) einen Elastizitätszugmodul von 2 MPa bis 50 MPa aufweist, wobei der Elastizitätszugmodul der Harzschicht (15) das 0,01- bis 0,50-fache eines Elastizitätszugmoduls des Reifenrahmens ist und die Harzschicht (15) einen Erweichungspunkt von 80 °C oder höher aufweist,

wobei der Elastizitätszugmodul der Harzschicht (15) und der Elastizitätszugmodul des Reifenrahmens jeweils durch Verwenden eines Reifenrahmenteststücks und einer Zugfestigkeitsprüfmaschine bei Raumtemperatur (25 °C) und bei einer Zuggeschwindigkeit von 100 mm/min, auf eine anfängliche Neigung bezogen, gemessen werden;

das Reifenrahmenteststück aus derselben Zusammensetzung wie der Reifenrahmen hergestellt ist, ein Teststück von Hantelgestalt (Teststück Nr. 5), wie in JIS K6251 (1993) definiert, aufweist und die Harzschicht (15) darauf gebildet ist; und

der Erweichungspunkt der Harzschicht (15) eine Temperatur bei einer Mindestspitzenposition eines primären Derivats eines Elastizitätsverlusts (E'), unter Anwendung einer dynamischen Viskoelastizitätsprüfvorrichtung unter den Bedingungen gemessen ist, dass die Temperatur 0 °C bis 180 °C beträgt, eine Temperaturerhöhungsrate 4 °C/min beträgt, eine Belastung 1 % beträgt und eine Messfrequenz 35 Hz beträgt.

**2.** Reifen (10) nach Anspruch 1, wobei die Harzschicht (15) eine Dicke von 1 μm bis 1000 μm aufweist.

**3.** Reifen (10) nach Anspruch 1 oder 2, wobei das Urethanharz eine dreidimensionale Netzwerkstruktur aufweist.

**4.** Reifen (10) nach einem der Ansprüche 1 bis 3, wobei das Urethanharz, als eine Monomereinheit, Polyisocyanat und mindestens eines ausgewählt aus der Gruppe bestehend aus einem Polyetherpolyol und einem Polycarbonatpolyol enthält.

**5.** Reifen (10) nach einem der Ansprüche 1 bis 4, wobei die Harzschicht (15) ferner mindestens eines enthält ausgewählt aus der Gruppe bestehend aus einem Ultraviolettabsorber auf der Basis von Triazin, einem Radikalfänger auf der Basis von gehindertem Amin, einem Anti-Alterungsmittel auf der Basis von Amin und Ruß.

**6.** Reifen (10) nach einem der Ansprüche 1 bis 5, wobei die Harzschicht (15) einen Oberflächenwiderstandswert von 1,0 x $10^4$ Ω/Quadrat bis 2,0 x $10^{10}$ Ω/Quadrat aufweist.

**7.** Reifen (10) nach einem der Ansprüche 1 bis 6, wobei die Harzschicht (15) ferner mindestens eines umfasst ausgewählt aus der Gruppe bestehend aus Glycerin, einem Polyvinylalkohol, einem Polyethylenglycol, einem Polypropylenglycol, einem Alkylsulfat, einem Sucrosefettsäureester und einem Glycerinfettsäureester.

8. Reifen (10) nach einem der Ansprüche 1 bis 7, wobei die Harzschicht (15) einen Erweichungspunkt von 120 °C oder höher aufweist.

9. Reifen (10) nach einem der Ansprüche 1 bis 7, wobei die Harzschicht (15) einen Erweichungspunkt von 140 °C oder höher aufweist.

10. Reifen (10) nach einem der Ansprüche 1 bis 9, wobei die Harzschicht (15) eine Dicke von 10 μm bis 150 μm aufweist.

11. Reifen (10) nach einem der Ansprüche 1 bis 10, wobei die Harzschicht (15) einen Elastizitätszugmodul von 3 MPa bis 40 MPa aufweist.

12. Reifen (10) nach einem der Ansprüche 1 bis 11, wobei ein Gehalt des Urethanharzes 60 Masse-% oder mehr mit Bezug auf eine Gesamtmasse der Harzschicht (15) beträgt.

13. Reifen (10) nach einem der Ansprüche 1 bis 12, wobei die Harzschicht (15) Ruß enthält und ein Gehalt von Ruß mit Bezug auf eine Gesamtmasse der Harzschicht (15) 0,1 Masse-% bis 20 Masse-% beträgt.

14. Reifen (10) nach einem der Ansprüche 1 bis 13, wobei die Harzschicht (15) einen Ultraviolettabsorber auf der Basis von Triazin enthält und ein Gehalt des Ultraviolettabsorbers auf der Basis von Triazin mit Bezug auf eine Gesamtmasse der Harzschicht (15) 2 Masse-% bis 20 Masse-% beträgt.

15. Reifen (10) nach einem der Ansprüche 1 bis 14, wobei die Harzschicht (15) einen Radikalfänger auf der Basis von gehindertem Amin enthält und ein Gehalt des Radikalfängers auf der Basis von gehindertem Amin mit Bezug auf eine Gesamtmasse der Harzschicht (15) 0,1 Masse-% bis 10 Masse-% beträgt.

## Revendications

1. Pneumatique (10), comprenant:

   une carcasse de pneumatique ayant une forme annulaire et comprenant une résine; et
   une couche de résine (15) qui est disposée sur au moins une partie d'une surface circonférentielle interne de la carcasse de pneumatique et qui contient une résine d'uréthane, **caractérisé en ce que** la couche de résine (15) présente un module d'élasticité sous traction de 2 MPa à 50 MPa, le module d'élasticité sous traction de la couche de résine (15) étant de 0,01 fois à 0,50 fois un module d'élasticité sous traction de la carcasse de pneumatique, et la couche de résine (15) ayant un point de ramollissement de 80°C ou plus,
   le module d'élasticité sous traction de la couche de résine (15) et le module d'élasticité sous traction de la carcasse de pneumatique étant respectivement mesurés en utilisant un élément de test de carcasse de pneumatique et un dispositif de test de traction à la température ambiante (25°C) et une vitesse de traction de 100 mm/min sur la base d'une inclinaison initiale;
   l'élément de test de carcasse de pneumatique est constitué de la même composition que la carcasse de pneumatique, présente une pièce de test en forme d'haltère (élément de test n° 5) telle que définie selon la norme JIS K 6251 (1993), et la couche de résine (15) est formée dessus; et
   le point de ramollissement de la couche de résine (15) est une température à une position pic minimale d'un dérivé primaire d'une perte élastique (E') mesurée en utilisant un dispositif de test de viscoélasticité dynamique sous les conditions que la température est de 0°C à 180°C, une vitesse d'élévation de la température est de 4°C/min, une contrainte est de 1 %, et une fréquence de mesure est de 35 Hz.

2. Pneumatique (10) selon la revendication 1, la couche de résine (15) ayant une épaisseur de 1 μm à 1 000 μm.

3. Pneumatique (10) selon la revendication 1 ou 2, la résine d'uréthane ayant une structure de réseau tridimensionnelle.

4. Pneumatique (10) selon l'une quelconque des revendications 1 à 3, la résine d'uréthane contenant, comme motif monomère, du polyisocyanate et au moins l'un sélectionné dans le groupe constitué d'un polyéther polyol et d'un polycarbonate polyol.

5. Pneumatique (10) selon l'une quelconque des revendications 1 à 4, la couche de résine (15) contenant en outre au moins l'un sélectionné dans le groupe constitué d'un agent d'absorption du rayonnement ultraviolet à base de triazine, d'un purificateur de radicaux à base d'aminé bloquée, d'un agent anti-vieillissement à base d'aminé et de noir de carbone.

6. Pneumatique (10) selon l'une quelconque des revendications 1 à 5, la couche de résine (15) ayant une valeur de résistance superficielle de 1,0 x $10^4$ Ω/ à 2,0 x $10^{10}$ Ω/.

7. Pneumatique (10) selon l'une quelconque des revendications 1 à 6, la couche de résine (15) comprenant en outre au moins l'un sélectionné dans le groupe constitué de la glycérine, d'un poly(alcool de vinyle), d'un polyéthylène glycol, d'un polypropylène glycol, d'un sulfate d'alkyle, d'un ester d'acide gras de saccharose, et d'un ester d'acide gras de glycérine.

8. Pneumatique (10) selon l'une quelconque des revendications 1 à 7, la couche de résine (15) ayant un point de ramollissement de 120°C ou plus.

9. Pneumatique (10) selon l'une quelconque des revendications 1 à 7, la couche de résine (15) ayant un point de ramollissement de 140°C ou plus.

10. Pneumatique (10) selon l'une quelconque des revendications 1 à 9, la couche de résine (15) ayant une épaisseur de 10 μm à 150 μm.

11. Pneumatique (10) selon l'une quelconque des revendications 1 à 10, la couche de résine (15) ayant un module d'élasticité sous traction de 3 MPa à 40 MPa.

12. Pneumatique (10) selon l'une quelconque des revendications 1 à 11, une teneur de la résine d'uréthane étant de 60 % en masse ou plus par rapport à une masse totale de la couche de résine (15).

13. Pneumatique (10) selon l'une quelconque des revendications 1 à 12, la couche de résine (15) contenant du noir de carbone, et une teneur du noir de carbone par rapport à une masse totale de la couche de résine (15) étant de 0,1 % en masse à 20 % en masse.

14. Pneumatique (10) selon l'une quelconque des revendications 1 à 13, la couche de résine (15) contenant un agent d'absorption du rayonnement ultraviolet à base de triazine, et une teneur de l'agent d'absorption du rayonnement ultraviolet à base de triazine par rapport à une masse totale de la couche de résine (15) étant de 2 % en masse à 20 % en masse.

15. Pneumatique (10) selon l'une quelconque des revendications 1 à 14, la couche de résine (15) contenant un purificateur de radicaux à base d'aminé bloquée, et une teneur du purificateur de radicaux à base d'amine bloquée par rapport à une masse totale de la couche de résine (15) étant de 0,1 % en masse à 10 % en masse.

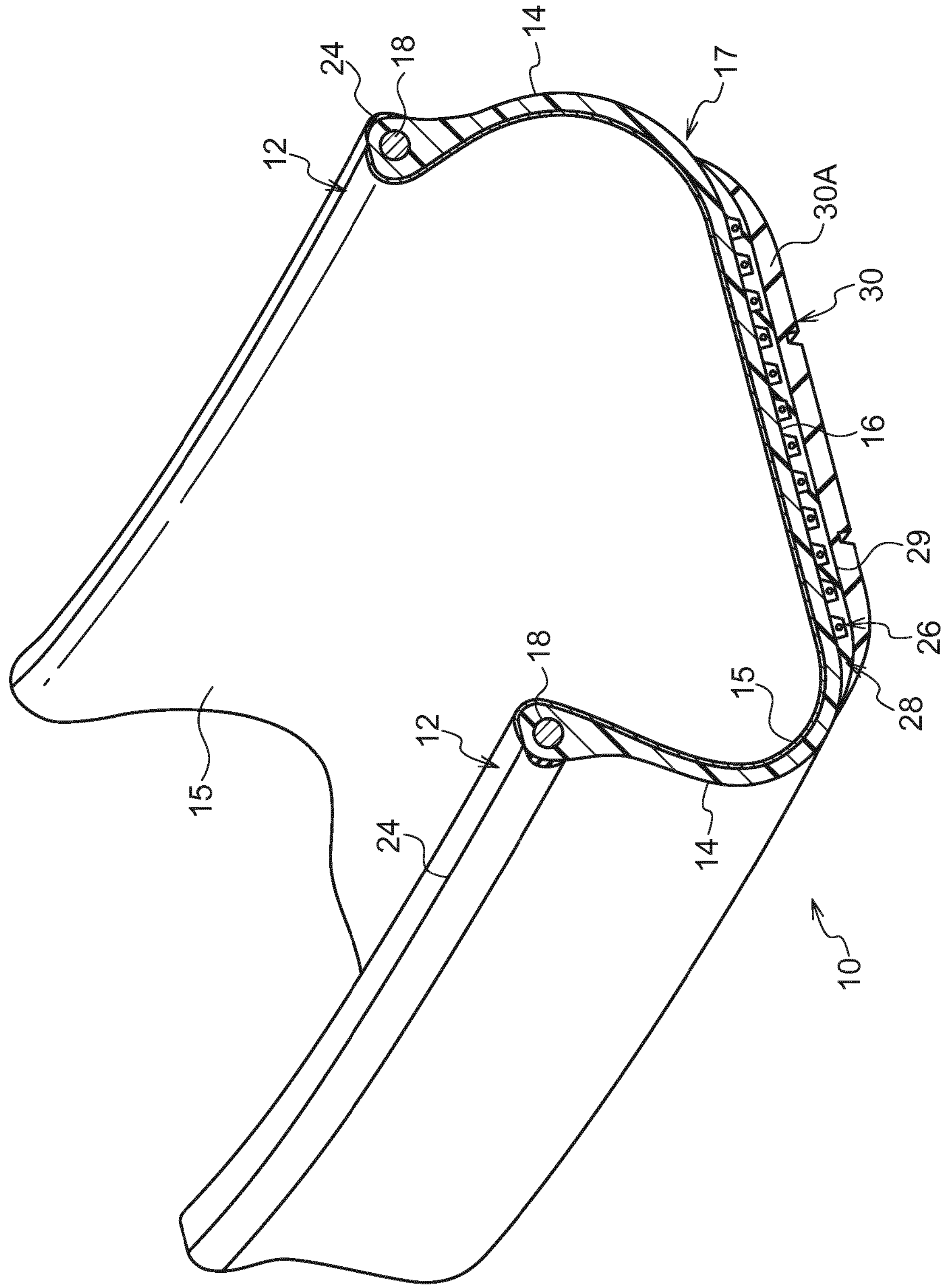


FIG.1A

FIG.1B

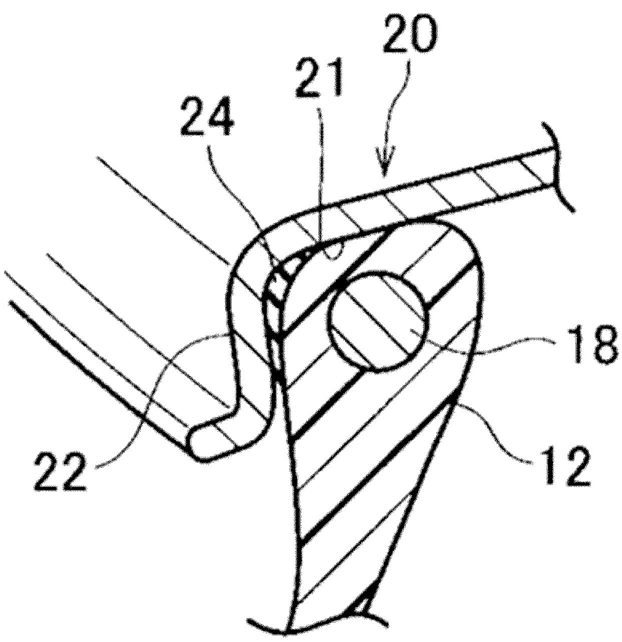

FIG.2

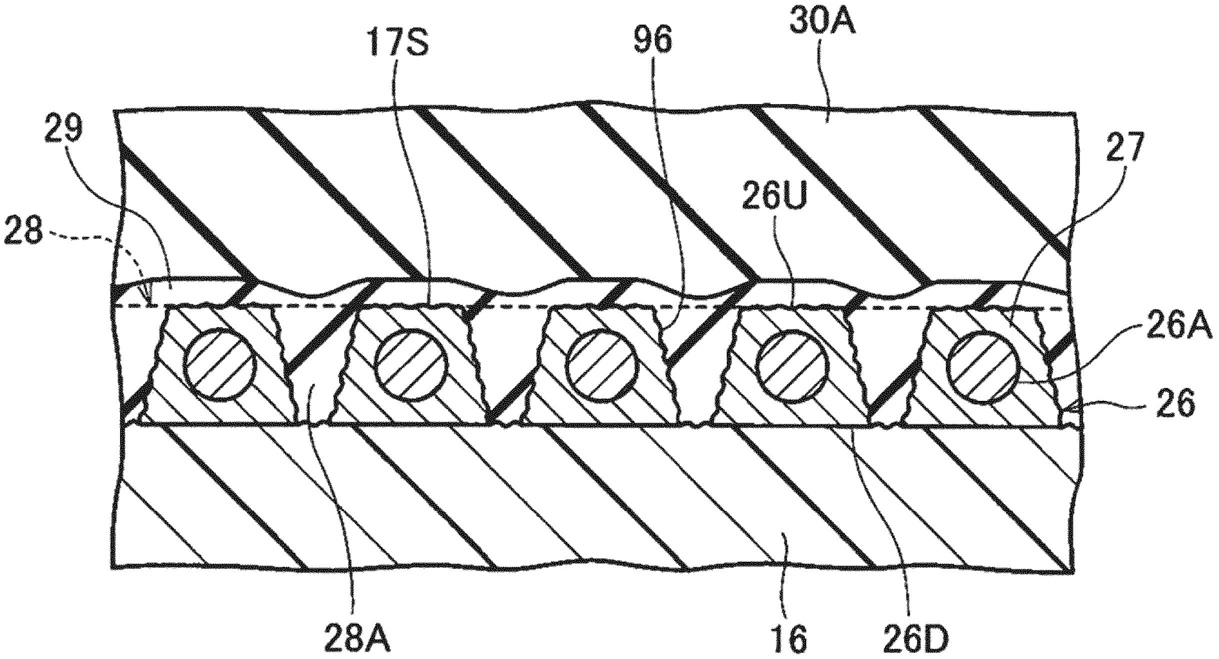

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012046030 A
- EP 2420393 A
- JP 2004346273 A
- JP H05331256 A


### Non-patent literature cited in the description


- JATMA YEAR BOOK. Automobile Tire Association Standard, 2009